# EUROPEAN PATENT APPLICATION

(11) **EP 4 676 157 A1**
(43) Date of publication of application: **07.01.2026**
(21) Application number: 24763058.5
(22) Date of filing: 23.02.2024
(51) Int. Cl.: H04W 74/08

(54) **METHOD AND APPARATUS FOR USE IN COMMUNICATION NODE FOR WIRELESS COMMUNICATION**

(30) Priority: 01.03.2023 CN 202310193761
(71) Applicant: Apogee Networks, LLC, Dallas, TX 75201 (US)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2024/078266
(87) International publication number: WO 2024/179376

(57) **Abstract**

The present application discloses a method and apparatus for use in a communication node for wireless communication. The method comprises: when at least a first BFR is triggered, a communication node initiating a first random access procedure; sending a first preamble, wherein the first preamble is associated with a target RS resource; receiving first signaling; in response to the first signaling being received, considering that the first random access procedure has been successfully completed; and when considering that the first random access procedure has been successfully completed, applying the target RS resource. A first BFD-RS set and a second BFD-RS set for a first cell are configured for a first node, and the first cell is an SpCell; when the radio link quality evaluated according to the first BFD-RS set is worse than a first threshold, a first counter is increased by 1; when the first counter reaches a first value, the first BFR is triggered; when the radio link quality evaluated according to the second BFD-RS set is worse than a second threshold, a second counter is increased by 1; when the second counter reaches a second value, a second BFR is triggered.

## Description

### Technical Field

The present application relates to a transmission method and apparatus in a wireless communication system, in particular to a transmission method and apparatus for beam failure recovery.

### Background Art

The 3rd Generation Partnership Project (3GPP) introduces a beam failure recovery (BFR) mechanism for a special cell (SpCell) in R15 (Release 15), and introduces a BFR mechanism for a secondary cell (SCell) in R16 (Release 16). A BFR mechanism for an SCell is introduced in R16. A BFR mechanism of multi-TRP (Multiple Transmitter and Receiver Point) is introduced in R17 (Release 17).

### Summary of the Invention

In the existing protocol, when an SpCell (Special Cell) is configured with two BFD (Beam Failure Detection)-RS (Reference Signal) sets, and in order that when BFR for both the BFD-RS sets is triggered and has not been successfully completed, UE (User Equipment) initiates a random access (RA) procedure, when this random access procedure has been successfully completed, the UE considers that a BFR procedure for each BFR-RS set of the SpCell has been successfully completed; and in addition, when the UE receives a PDCCH addressed to a C-RNTI indicating an uplink grant for a new transmission for a HARQ process used to send an Enhanced BFR MAC (Medium Access Control) CE (Control Element) or a Truncated Enhanced BFR MAC CE, a candidate RS resource indicated by the Enhanced BFR MAC CE or the Truncated Enhanced BFR MAC CE in Msg3 or MSGA for one BFR-RS set is applied. Researchers have found that if the candidate RS resource only relies on the candidate RS resource indicated by the Enhanced BFR MAC CE or the Truncated Enhanced BFR MAC CE in the Msg3 or the MSGA, it will result in a situation where a new available RS resource cannot be applied in a timely manner, thus affecting system performance. Therefore, the BFR mechanism for the SpCell needs to be enhanced.

In view of the above-mentioned problem, the present application provides a solution for SpCell BFR. In the description for the above-mentioned problem, an NR system is used as an example. The present application is also applicable to scenarios such as future 3GPP systems to achieve technical effects similar to those of the NR system. Further, although the present application provides a specific implementation for SpCell BFR, the present application can also be used in scenarios such as SCell BFR to achieve technical effects similar to those of the SpCell BFR. Further, although the original intention of the present application is for a Uu air interface, the present application can also be used for a PC5 interface to achieve technical effects similar to those of the Uu air interface. Further, although the original intention of the present application is for terminal and base station scenarios, the present application is also applicable to a V2X (Vehicle-to-Everything) scenario, as well as communication scenarios between terminals and relays and between relays and base stations to achieve technical effects similar to those in the terminal and base station scenarios. Further, although the original intention of the present application is for terminal and base station scenarios, the present application is also applicable to a communication scenario of IAB (Integrated Access and Backhaul) to achieve technical effects similar to those in the terminal and base station scenarios. Further, although the original intention of the present application is for terrestrial network (TN) scenarios, the present application is also applicable to communication scenarios of non-terrestrial networks (NTNs) to achieve technical effects similar to those in the TN scenarios. In addition, the use of a unified solution for different scenarios also helps to reduce hardware complexity and costs.

As one embodiment, the interpretation of the terminologies in the present application refers to the definition of the specification protocol TS36 series of 3GPP.

As one embodiment, the interpretation of the terminologies in the present application refers to the definition of the specification protocol TS38 series of 3GPP.

As one embodiment, the interpretation of the terminologies in the present application refers to the definition of the specification protocol TS37 series of 3GPP.

As one embodiment, the interpretation of the terminologies in the present application refers to the definition of the specification protocol of IEEE (Institute of Electrical and Electronics Engineers).

It should be noted that, in the absence of conflicts, embodiments and features in the embodiments of any node of the present application may be applied to any other node. In the absence of conflicts, the embodiments and features in the embodiments of the present application may be arbitrarily combined with each other.

The present application discloses a method for use in a first node for wireless communication, characterized by comprising:
initiating a first random access procedure when at least a first BFR is triggered; sending a first Preamble in the first random access procedure, the first Preamble being associated with a target RS resource; receiving first signaling; in response to the first signaling being received, considering that the first random access procedure has been successfully completed; and along with a behavior of considering that the first random access procedure has been successfully completed, applying the target RS resource,
wherein a first BFD-RS set and a second BFD-RS set for a first cell are configured for a first node, and the first cell is one SpCell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

As one embodiment, a problem to be solved by the present application includes: how to avoid inability to apply a new available RS resource for an SpCell in a timely manner.

As one embodiment, a feature of the above-mentioned method includes: along with a behavior of considering that the first random access procedure has been successfully completed, applying the target RS resource that is associated with the first Preamble.

As one embodiment, an advantage of the above-mentioned method includes: using the target RS resource that is associated with the first Preamble as a new available RS resource, thereby enabling UE to apply the new available RS resource when random access is completed.

As one embodiment, an advantage of the above-mentioned method includes: reducing interruption time.

As one embodiment, an advantage of the above-mentioned method includes: recovering beam failures in a timely manner.

According to one aspect of the present application, the target RS resource is one RS resource in a first RS resource group, the first RS resource group is one subset of a first RS resource set, and the first RS resource set includes at least one RS resource; the first RS resource set is configured to the first cell; and only the first RS resource group in the first RS resource set is associated with the first BFD-RS set.

According to one aspect of the present application, it is characterized by comprising:
determining the target RS resource in the first RS resource group before a behavior of sending the first Preamble,
wherein the first BFD-RS set is used for determining the first RS resource group.

According to one aspect of the present application, it is characterized by comprising:
determining the target RS resource in the first RS resource set before the behavior of sending the first Preamble.

According to one aspect of the present application, it is characterized by comprising:
receiving second signaling, the second signaling being used to indicate the first RS resource group in the first RS resource set.

According to one aspect of the present application, it is characterized by comprising:
sending a first MAC CE in the first random access procedure,
wherein the first MAC CE indicates that beam failures are detected for at least the first BFD-RS set and the second BFD-RS set, and the first MAC CE does not comprise a candidate RS ID of any one of the first BFD-RS set and the second BFD-RS set.

According to one aspect of the present application, it is characterized by comprising:
starting a first time window along with the first Preamble; and during an operation of the first time window, monitoring a PDCCH (Physical Downlink Control Channel) identified by a C-RNTI of the first node in a first search space,
wherein, during the operation of the first time window, the first signaling is received; and the first search space is used for BFR.

The present application discloses a method for use in a second node for wireless communication, characterized by comprising:
receiving a first Preamble in a first random access procedure, the first Preamble being associated with a target RS resource; and sending first signaling,
wherein the first random access procedure is initiated when at least a first BFR is triggered;
in response to the first signaling being received, the first random access procedure is considered to have been successfully completed; along with the first random access procedure being considered to have been successfully completed, the target RS resource is applied; a first BFD-RS set and a second BFD-RS set for a first cell are configured for a first node, and the first cell is one SpCell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

According to one aspect of the present application, the target RS resource is one RS resource in a first RS resource group, the first RS resource group is one subset of a first RS resource set, and the first RS resource set includes at least one RS resource; the first RS resource set is configured to the first cell; and only the first RS resource group in the first RS resource set is associated with the first BFD-RS set.

According to one aspect of the present application, it is characterized in that the target RS resource is determined in the first RS resource group before the first Preamble is sent, wherein the first BFD-RS set is used for determining the first RS resource group.

According to one aspect of the present application, it is characterized in that the target RS resource is determined in the first RS resource set before the first Preamble is sent.

According to one aspect of the present application, it is characterized by comprising:
sending second signaling, the second signaling being used to indicate the first RS resource group in the first RS resource set.

According to one aspect of the present application, it is characterized by comprising:
receiving a first MAC CE in the first random access procedure;
wherein the first MAC CE indicates that beam failures are detected for at least the first BFD-RS set and the second BFD-RS set, and the first MAC CE does not comprise a candidate RS ID of any one of the first BFD-RS set and the second BFD-RS set.

According to one aspect of the present application, it is characterized in that a first time window is started along with the first Preamble; during an operation of the first time window, a PDCCH identified by a C-RNTI of a recipient of the first signaling is monitored in a first search space; during the operation of the first time window, the first signaling is received; and the first search space is used for BFR.

The present application discloses a first node for use in wireless communication, characterized by comprising:
a first processor unit initiating a first random access procedure when at least a first BFR is triggered; sending a first Preamble in the first random access procedure, the first Preamble being associated with a target RS resource; receiving first signaling; in response to the first signaling being received, considering that the first random access procedure has been successfully completed; and along with a behavior of considering that the first random access procedure has been successfully completed, applying the target RS resource,
wherein a first BFD-RS set and a second BFD-RS set for a first cell are configured for a first node, and the first cell is one SpCell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

The present application discloses a second node for use in wireless communication, characterized by comprising:
a second processor unit receiving a first Preamble in a first random access procedure, the first Preamble being associated with a target RS resource; and sending first signaling,
wherein the first random access procedure is initiated when at least a first BFR is triggered;
in response to the first signaling being received, the first random access procedure is considered to have been successfully completed; along with the first random access procedure being considered to have been successfully completed, the target RS resource is applied; a first BFD-RS set and a second BFD-RS set for a first cell are configured for a first node, and the first cell is one SpCell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

As one embodiment, compared with a traditional solution, the present application has the following advantages:
- . enabling UE to apply a new available RS resource when random access is completed;
- . recovering beam failures in a timely manner; and
- . reducing interruption time.

The present application discloses a method for use in a first node for wireless communication, characterized by comprising:
initiating a first random access procedure over a first cell; determining a target RS resource in a first RS resource group; and sending a first Preamble, the first Preamble being associated with the target RS resource,
wherein the first RS resource group is one proper subset of a first RS resource set, and the first RS resource set comprises at least one RS resource; and the first RS resource set is configured to the first cell.

As one embodiment, a problem to be solved by the present application includes: how to determine a target RS resource in a first RS resource set.

As one embodiment, a feature of the above-mentioned method includes: determining a target RS resource in a first RS resource group in a first RS resource set.

As one embodiment, an advantage of the above-mentioned method includes: enabling a Preamble to indicate more accurate spatial information.

As one embodiment, an advantage of the above-mentioned method includes: a Preamble can indicate an RS resource group.

As one embodiment, an advantage of the above-mentioned method includes: obtaining more accurate spatial information by using a random access procedure.

As one embodiment, an advantage of the above-mentioned method includes: obtaining more accurate downlink spatial information by using a random access procedure.

According to one aspect of the present application, it is characterized by comprising:
receiving second signaling, the second signaling being used to indicate the first RS resource group in the first RS resource set.

According to one aspect of the present application, it is characterized by comprising:
determining a first RS resource group in a first RS resource set.

According to one aspect of the present application, it is characterized by comprising:
receiving a first DCI, the first DCI being used for triggering the first random access procedure;
wherein the first DCI is used for determining the first RS resource group.

According to one aspect of the present application, it is characterized in that at least a first BFR being triggered is used for triggering the first random access procedure; a first BFD-RS set and a second BFD-RS set are configured for a first cell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

The present application discloses a method for use in a second node for wireless communication, characterized by comprising:
receiving a first Preamble, the first Preamble being associated with a target RS resource,
wherein the first random access procedure is initiated over a first cell; the target RS resource is determined in a first RS resource group; the first RS resource group is one proper subset of a first RS resource set, and the first RS resource set comprises at least one RS resource; and the first RS resource set is configured to the first cell.

According to one aspect of the present application, it is characterized by comprising:
sending second signaling, the second signaling being used to indicate the first RS resource group in the first RS resource set.

According to one aspect of the present application, it is characterized in that the first RS resource group is determined in the first RS resource set.

According to one aspect of the present application, it is characterized by comprising:
sending a first DCI, the first DCI being used for triggering the first random access procedure,
wherein the first DCI is used for determining the first RS resource group.

According to one aspect of the present application, it is characterized in that at least a first BFR being triggered is used for triggering the first random access procedure; a first BFD-RS set and a second BFD-RS set are configured for a first cell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

As one embodiment, compared with a traditional solution, the present application has the following advantages:
- . enabling UE to apply a new available RS resource when random access is completed;
- . recovering beam failures in a timely manner; and
- . reducing interruption time.

### Brief Description of the Drawings

Other features, purposes and advantages of the present application will become more apparent from reading the detailed description of the non-limiting embodiments made with reference to the following drawings:
FIG. 1 shows a flowchart of a transmission of a first Preamble and first signaling according to one embodiment of the present application;
FIG. 1A shows a flowchart of a transmission of a first Preamble according to one embodiment of the present application;
FIG. 2 shows a schematic diagram of a network architecture according to one embodiment of the present application;
FIG. 3 shows a schematic diagram of an embodiment of a wireless protocol architecture for a user plane and a control plane according to one embodiment of the present application;
FIG. 4 shows a schematic diagram of a first communication device and a second communication device according to one embodiment of the present application;
FIG. 5 shows a flowchart of a wireless signal transmission according to one embodiment of the present application;
FIG. 5A shows a flowchart of a wireless signal transmission according to one embodiment of the present application;
FIG. 6 shows a flowchart of a wireless signal transmission according to another embodiment of the present application;
FIG. 7 shows a flowchart of a wireless signal transmission according to still another embodiment of the present application;
FIG. 8 shows a flowchart of determining a target RS resource before a first Preamble is sent according to one embodiment of the present application;
FIG. 9 shows a flowchart of determining a target RS resource before a first Preamble is sent according to another embodiment of the present application;
FIG. 10 shows a schematic diagram of only a first RS resource group in a first RS resource set being associated with a first BFD-RS set according to one embodiment of the present application;
FIG. 11 shows a flowchart of monitoring a PDCCH identified by a C-RNTI of a first node in a first search space according to one embodiment of the present application;
FIG. 12 shows a structural block diagram of a processing unit used in a first node according to one embodiment of the present application;
FIG. 12A shows a structural block diagram of a processing unit used in a first node according to one embodiment of the present application;
FIG. 13 shows a structural block diagram of a processing unit used in a second node according to one embodiment of the present application; and
FIG. 13A shows a structural block diagram of a processing unit used in a second node according to one embodiment of the present application.

### Detailed Description of Embodiments

The technical solutions of the present application will be further described in detail below in conjunction with the drawings. It should be noted that, in case of no conflict, embodiments and features in the embodiments in the present application may be arbitrarily combined with each other.

### Embodiment 1

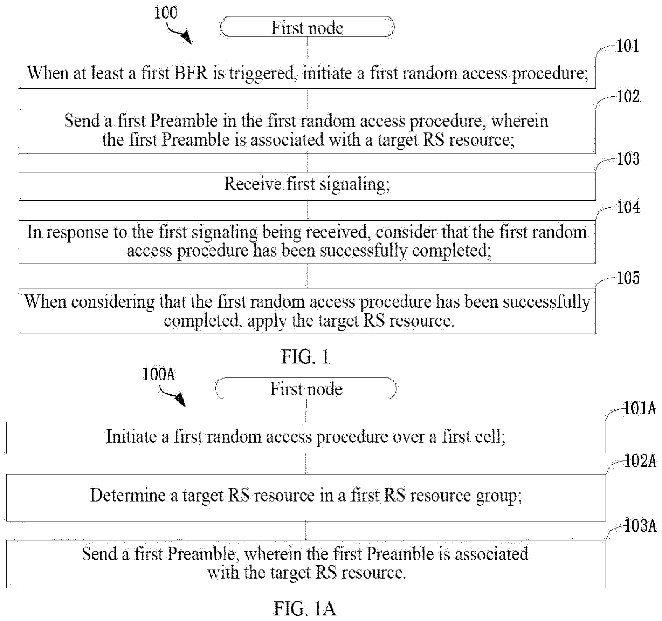

Embodiment 1 illustrates a flowchart of a transmission of a first Preamble and first signaling according to one embodiment of the present application, as shown in FIG. 1. In FIG. 1, each block represents one step, and it should be particularly emphasized that the order of the blocks in the figure does not represent the chronological relationship between the steps represented.

In Embodiment 1, a first node in the present application initiates a first random access procedure when at least a first BFR is triggered in step 101; sends a first Preamble in the first random access procedure in step 102, the first Preamble being associated with a target RS resource; receives the first signaling in step 103; in response to the first signaling being received, considers that the first random access procedure has been successfully completed in step 104; and along with a behavior of considering that the first random access procedure has been successfully completed, applying the target RS resource in step 105, wherein a first BFD-RS set and a second BFD-RS set for a first cell are configured for a first node, and the first cell is one SpCell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

As one embodiment, the first random access procedure is one CFRA (Contention Free Random Access).

As one embodiment, the first random access procedure is one CBRA (Contention Based Random Access).

As one embodiment, the phrase that at least a first BFR is triggered means that only the first BFR is triggered.

As one embodiment, the phrase that at least a first BFR is triggered means that the first BFR is triggered and the second BFR is triggered.

As one embodiment, the phrase that at least a first BFR is triggered means that the first BFR is triggered, the second BFR is triggered, and any one of a beam failure recovery procedure for the first BFR and a beam failure recovery procedure for the second BFR has not been successfully completed.

As one embodiment, the first random access procedure is a random access procedure triggered by BFR.

As one embodiment, the first random access procedure is considered to be a random access procedure triggered by BFR.

As one embodiment, the first random access procedure is triggered by the first BFR for the first BFD-RS set and the second BFR for the second BFD-RS set over the first cell.

As one embodiment, when the first BFR is triggered and has not been canceled, and available UL-SCH (Uplink Shared Channel) resources for new transmissions cannot accommodate any one of an Enhanced BFR MAC CE or a Truncated Enhanced BFR MAC CE, the first random access procedure is initiated.

As one sub-embodiment of this embodiment, the first BFD-RS set is configured with a target indication, which is used to enable the behavior of "when the first BFR is triggered and has not been canceled, and available UL-SCH resources for new transmissions cannot accommodate any one of an Enhanced BFR MAC CE or a Truncated Enhanced BFR MAC CE, the first random access procedure is initiated".

As one sub-embodiment of this embodiment, the first node is configured with a target indication, which is used to enable the behavior of "when the first BFR is triggered and has not been canceled, and available UL-SCH resources for new transmissions cannot accommodate any one of an Enhanced BFR MAC CE or a Truncated Enhanced BFR MAC CE, the first random access procedure is initiated".

As one sub-embodiment of this embodiment, when the first random access procedure is initiated, any of the second BFRs has not been triggered.

As one sub-embodiment of this embodiment, the first random access procedure triggered by the first BFR is a random access procedure triggered by BFR.

As one sub-embodiment of this embodiment, the first random access procedure triggered by the first BFR is considered to be a random access procedure triggered by BFR.

As one embodiment, when the first BFR is triggered, the second BFR is triggered, and any one of a beam failure recovery procedure for the first BFR and a beam failure recovery procedure for the second BFR has not been successfully completed, the first random access procedure is initiated.

As one sub-embodiment of this embodiment, the first random access procedure triggered by the first BFR for the first BFD-RS set and the second BFR for the second BFD-RS set over the first cell is a random access procedure triggered by BFR.

As one sub-embodiment of this embodiment, the first random access procedure triggered by the first BFR for the first BFD-RS set and the second BFR for the second BFD-RS set over the first cell is considered to be a random access procedure triggered by BFR.

As one embodiment, when the first BFR is triggered and has not been canceled, and available UL-SCH resources for new transmissions cannot accommodate any one of an Enhanced BFR MAC CE or a Truncated Enhanced BFR MAC CE, an SR (Scheduling Request) is triggered; and the behavior of triggering the SR is used for triggering the first random access procedure.

As one sub-embodiment of this embodiment, when the SR is triggered and no valid PUCCH (Physical Uplink Control Channel) resource for a pending SR is configured by the MAC entity, the first random access procedure is initiated.

As one sub-embodiment of this embodiment, the first random access procedure triggered by the behavior of triggering the SR is a random access procedure triggered by BFR.

As one sub-embodiment of this embodiment, the first random access procedure triggered by the behavior of triggering the SR is considered to be a random access procedure triggered by BFR.

As one embodiment, the target RS resource is used for determining a PRACH (Physical Random Access Channel) occasion of sending the first Preamble.

As one embodiment, the first Preamble is configured to the target RS resource.

As one embodiment, the first Preamble is configured to at least the target RS resource.

As one embodiment, the first Preamble is one PRACH transmission.

As one embodiment, the first Preamble is the last Preamble sent in the first random access procedure.

As one embodiment, the first Preamble is the last PRACH transmission in the first random access procedure.

As one embodiment, within a time interval between the first Preamble being sent and the first signaling being received, the first node does not send any Preamble for the first random access procedure.

As one embodiment, within a time interval between the first Preamble being sent and the first signaling being received, the first node does not send any PRACH transmission for the first random access procedure.

As one embodiment, the target RS resource is used for determining a sending occasion of the first Preamble.

As one embodiment, the sending occasion means a PRACH occasion.

As one embodiment, the sending occasion includes: at least one of a time domain resource or a frequency domain resource used for sending.

As one embodiment, the next available PRACH occasion is determined from the PRACH occasions corresponding to the target RS resource (determine the next available PRACH occasion from the PRACH occasions corresponding to the target RS resource.).

As one embodiment, the target RS resource is one RS resource selected by the first node.

As one embodiment, the target RS resource is one RS resource configured by the second node.

As one embodiment, before the behavior that the first Preamble is sent, the target RS resource is determined.

As one embodiment, the behavior that the target RS resource is determined includes: evaluating the target RS resource.

As one embodiment, the behavior that the target RS resource is determined includes: selecting the target RS resource.

As one embodiment, before the behavior that the first Preamble is sent, the first Preamble is determined.

As one embodiment, the behavior that first Preamble is determined includes: selecting the first Preamble.

As one embodiment, before the behavior that the first Preamble is sent, a sending occasion of the first Preamble is determined.

As one embodiment, the behavior that the sending occasion of the first Preamble is determined includes: selecting the sending occasion of the first Preamble.

As one embodiment, before the behavior that the first Preamble is sent, the target RS resource is first determined, the first Preamble is then determined, and the sending occasion of the first Preamble is then determined.

As one embodiment, the target RS resource is used for determining the first Preamble, and the target RS resource and the first Preamble are used for determining the sending occasion of the first Preamble.

As one embodiment, the target RS resource is used for determining the first Preamble, and the target RS resource is used for determining the sending occasion of the first Preamble.

As one embodiment, before the behavior that the first Preamble is sent, the first Preamble is first determined, the target RS resource is then determined, and the sending occasion of the first Preamble is then determined.

As one embodiment, the first Preamble is used for determining the target RS resource, and the target RS resource is used for determining the sending occasion of the first Preamble.

As one embodiment, the first signaling is received over the first cell.

As one embodiment, the first signaling is one PDCCH transmission over the first cell.

As one embodiment, the first signaling is one piece of physical layer signaling.

As one embodiment, the first signaling is one physical layer signal.

As one embodiment, the first signaling is one PDCCH transmission.

As one embodiment, the first signaling is one DCI.

As one embodiment, a format of the first signaling is DCI format 1_0.

As one embodiment, a format of the first signaling is DCI format 1_1.

As one embodiment, the first signaling is used for scheduling a PDSCH (Physical Downlink Shared Channel).

As one embodiment, the first signaling is used for scheduling a PUSCH (Physical Uplink Shared Channel).

As one embodiment, the first signaling is identified by a first C-RNTI (Cell RNTI (Radio Network Temporary Identifier)).

As one embodiment, the first signaling is one PDCCH transmission addressed to a first C-RNTI.

As one embodiment, the first signaling being identified by the first C-RNTI means: the first signaling is scrambled by the first C-RNTI.

As one embodiment, the first signaling being identified by the first C-RNTI means: a CRC (Cyclic Redundancy Check) of the first signaling is scrambled by the first C-RNTI.

As one embodiment, the meaning of the first signaling being identified by the first C-RNTI means: the first signaling is addressed to the first C-RNTI.

As one embodiment, the first C-RNTI is one C-RNTI.

As one embodiment, the first C-RNTI is one C-RNTI of the first node.

As one embodiment, the first C-RNTI is a C-RNTI of the first node in the first cell.

As one embodiment, the first C-RNTI is a C-RNTI of the first node in a cell group to which the first cell belongs.

As one embodiment, the first C-RNTI is a C-RNTI of the first node in an MAC entity associated with the first cell.

As one embodiment, the first signaling being received is used for determining that the first random access procedure is considered to have been successfully completed.

As one embodiment, the first signaling being received is used for determining that the target RS resource is applied.

As one embodiment, a receiving moment of the first signaling is used for determining an effective moment of the target RS resource.

As one embodiment, the phrase of in response to the first signaling being received includes: when the first signaling is received.

As one embodiment, the phrase of in response to the first signaling being received includes: at least after the first signaling is received.

As one embodiment, the phrase of in response to the first signaling being received includes: once the first signaling is received.

As one embodiment, the phrase of in response to the first signaling being received includes: if the first signaling is received.

As one embodiment, the phrase of along with the behavior of considering that the first random access procedure has been successfully completed includes: in response to the first signaling being received.

As one embodiment, the phrase of along with the behavior of considering that the first random access procedure has been successfully completed includes: when the first random access procedure is considered to have been successfully completed.

As one embodiment, the phrase of along with the behavior of considering that the first random access procedure has been successfully completed includes: when the first signaling is received.

As one embodiment, the phrase of along with the behavior of considering that the first random access procedure has been successfully completed includes: at least after the first signaling is received.

As one embodiment, the phrase of along with the behavior of considering that the first random access procedure has been successfully completed includes: after 28 symbols from a last symbol of the first signaling.

As one embodiment, the behavior of considering that the first random access procedure has been successfully completed is used for determining that a beam failure recovery procedure has been successfully completed.

As one embodiment, the behavior of considering that the first random access procedure has been successfully completed is used for determining that a beam failure recovery procedure for at least one of the first BFD-RS set and the second BFD-RS set has been successfully completed.

As one embodiment, the behavior of considering that the first random access procedure has been successfully completed is used for determining that a beam failure recovery procedure for the BFD-RS set associated with the target RS resource has been successfully completed.

As one embodiment, when it is considered that the first random access procedure has been successfully completed, a beam failure recovery procedure is considered to have been successfully completed.

As one embodiment, when it is considered that the first random access procedure has been successfully completed, a beam failure recovery procedure for at least one of the first BFD-RS set and the second BFD-RS set is considered to have been successfully completed.

As one embodiment, when it is considered that the first random access procedure has been successfully completed, a beam failure recovery procedure for the BFD-RS set associated with the target RS resource is considered to have been successfully completed.

As one embodiment, the behavior that the target RS resource is applied includes: using the target RS resource as q_{new}.

As one embodiment, the behavior that the target RS resource is applied includes: for a CORESET (Control Resource Set) corresponding to a BFD-RS set associated with the target RS resource, considering that antenna port quasi-collocation parameters correspond to the target RS resource.

As one embodiment, the behavior that the target RS resource is applied includes: using the same antenna port quasi-collocation parameters as the target RS resource to monitor a PDCCH.

As one embodiment, the behavior that the target RS resource is applied includes: using the same antenna port quasi-collocation parameters as the target RS resource to monitor a PDCCH in the CORESET corresponding to the BFD-RS set associated with the target RS resource.

As one embodiment, the behavior that the target RS resource is applied includes: sending one uplink physical layer signal, a power of the one uplink physical layer signal depending on the target RS resource.

As one embodiment, the behavior that the target RS resource is applied includes: sending one uplink physical layer signal using the same spatial filter as the first Preamble, a power of the one uplink physical layer signal depending on the target RS resource.

As one embodiment, the behavior that the target RS resource is applied includes: sending one PUCCH over the first cell using the same spatial filter as the first Preamble; and the first Preamble is associated with the target RS resource.

As one embodiment, the behavior that the target RS resource is applied includes: sending one SRS using the same spatial filter as the first Preamble, a power of the SRS depending on the target RS resource.

As one embodiment, the behavior that the target RS resource is applied includes: sending one PUCCH over the first cell using a power determined according to Section 7.2.1 of TS 38.213, wherein qᵤ = 0, q_{d} = q_{new}, and l = 0, and q_{new} is the target RS resource.

As one embodiment, the behavior that the target RS resource is applied includes: sending one PUCCH over the first cell using the same spatial filter as the first Preamble and a power determined according to Section 7.2.1 of TS 38.213; the first Preamble is associated with the target RS resource; and qᵤ = 0, q_{d} = q_{new}, and l = 0, and q_{new} is the target RS resource.

As one embodiment, the one PUCCH is associated with a BFD-RS set corresponding to the target RS resource.

As one embodiment, the one PUCCH is associated with any one of the first BFD-RS set and the second BFD-RS set.

As one embodiment, the phrase that a first BFD-RS set and a second BFD-RS set for the first cell is configured for the first node means: the first node is configured by an RRC message for the first BFD-RS set and the second BFD-RS set for the first cell.

As one embodiment, the phrase that a first BFD-RS set and a second BFD-RS set for the first cell is configured for the first node means: the first node is provided for the first BFD-RS set and the second BFD-RS set for the first cell.

As one embodiment, the phrase that a first BFD-RS set and a second BFD-RS set for the first cell is configured for the first node means: the first node is determined for the first BFD-RS set and the second BFD-RS set for the first cell.

As one embodiment, the first BFD-RS set and the second BFD-RS set are for the same BWP (Bandwidth Part) of the first cell.

As one embodiment, the first BFD-RS set and the second BFD-RS set are for an initial BWP the first cell.

As one embodiment, the first BFD-RS set and the second BFD-RS set are for an active BWP of the first cell.

As one embodiment, the first BFD-RS set and the second BFD-RS set are for the same downlink carrier of the first cell.

As one embodiment, the first BFD-RS set is for the first cell, and the second BFD-RS set is for the first cell.

As one embodiment, the first BFD-RS set is for the first cell, and the second BFD-RS set is for a second cell. A PCI (Physical Cell Identifier) of the second cell is different from a PCI of the first cell.

As one embodiment, any one of the first BFD-RS set and the second BFD-RS set is not configured with an identifier of the second cell.

As one embodiment, the latter of the first BFD-RS set and the second BFD-RS set is configured with an identifier of the second cell.

As one sub-embodiment of this embodiment, the identifier of the second cell is a PCI of the second cell.

As one sub-embodiment of this embodiment, the identifier of the second cell is indicated by additionalPCI.

As one sub-embodiment of this embodiment, the identifier of the second cell is indicated by additionalPCI-r17.

As one sub-embodiment of this embodiment, the identifier of the second cell is indicated by AdditionalPCIIndex-r17.

As one embodiment, any RS resource in the first BFD-RS set is periodic.

As one embodiment, any RS resource in the first BFD-RS set is QCL (quasi-colocation)-Type D.

As one embodiment, the at least one RS resource in the first BFD-RS set is used for beam failure detection (BFD).

As one embodiment, any RS resource in the first BFD-RS set is a downlink resource.

As one embodiment, any RS resource in the first BFD-RS set is a CSI (Channel State Information)-RS (Reference signal) resource.

As one embodiment, any RS resource in the first BFD-RS set is an SSB resource.

As one embodiment, the SSB is an SS (Synchronization Signal)/PBCH (Physical Broadcast Channel).

As one embodiment, the SSB is a synchronization signal block.

As one embodiment, any RS resource in the first BFD-RS set is an SSB resource or a CSI-RS resource.

As one embodiment, one RS resource in the first BFD-RS set is a CSI-RS resource identified by csi-RS-Index or an SSB resource identified by ssb-Index.

As one embodiment, a quantity of RS resources included in the first BFD-RS set is variable.

As one embodiment, a quantity of RS resources included in the first BFD-RS set is fixed.

As one embodiment, a quantity of RS resources included in the first BFD-RS set is configurable.

As one embodiment, the first BFD-RS set includes a positive integer number of RS resources.

As one embodiment, the first BFD-RS set includes up to 2 RS resources.

As one embodiment, the first BFD-RS set includes up to N_{BFD} RS resources, and the N_{BFD} is configurable.

As one embodiment, the first BFD-RS set is one q̅_{0,0}.

As one embodiment, the first BFD-RS set is one BFD-RS set.

As one embodiment, the first BFD-RS set is configured by an RRC (Radio Link Control) message.

As one embodiment, the first BFD-RS set is configured by failureDetectionSet1.

As one embodiment, the first BFD-RS set is configured by failureDetectionSet1-r17.

As one embodiment, the first BFD-RS set is activated by an MAC CE.

As one embodiment, the first BFD-RS set is activated by a BFD-RS Indication MAC CE.

As one embodiment, the first BFD-RS set is determined by the first node.

As one embodiment, any RS resource in the second BFD-RS set is periodic.

As one embodiment, any RS resource in the second BFD-RS set is QCL (quasi-colocation)-Type D.

As one embodiment, the at least one RS resource in the second BFD-RS set is used for beam failure detection.

As one embodiment, any RS resource in the second BFD-RS set is a downlink resource.

As one embodiment, any RS resource in the second BFD-RS set is a CSI-RS resource.

As one embodiment, any RS resource in the second BFD-RS set is an SSB resource.

As one embodiment, any RS resource in the second BFD-RS set is an SSB resource or a CSI-RS resource.

As one embodiment, one RS resource in the second BFD-RS set is a CSI-RS resource identified by csi-RS-Index or an SSB resource identified by ssb-Index.

As one embodiment, a quantity of RS resources included in the second BFD-RS set is variable.

As one embodiment, a quantity of RS resources included in the second BFD-RS set is fixed.

As one embodiment, a quantity of RS resources included in the second BFD-RS set is configurable.

As one embodiment, the second BFD-RS set includes a positive integer number of RS resources.

As one embodiment, the second BFD-RS set includes up to 2 RS resources.

As one embodiment, the second BFD-RS set includes up to N_{BFD} RS resources, and the N_{BFD} is configurable.

As one embodiment, the second BFD-RS set is q̅_{0,1}.

As one embodiment, the second BFD-RS set is one BFD-RS set.

As one embodiment, the second BFD-RS set is configured by an RRC message.

As one embodiment, the second BFD-RS set is configured by failureDetectionSet2.

As one embodiment, the second BFD-RS set is configured by failureDetectionSet2-r17.

As one embodiment, the second BFD-RS set is activated by an MAC CE.

As one embodiment, the second BFD-RS set is activated by a BFD-RS Indication MAC CE.

As one embodiment, the second BFD-RS set is determined by the first node.

As one embodiment, radio link quality is evaluated according to the first BFD-RS set during each first evaluation period.

As one embodiment, the first evaluation period includes a time interval of at least 1 millisecond (ms).

As one embodiment, the first evaluation period is 1 frame.

As one embodiment, the first evaluation period is 1 radio frame.

As one embodiment, the first evaluation period includes at least 1 slot, and the slot includes at least one of a solt, or a subframe, or a radio frame, or a frame, or a plurality of OFDM (Orthogonal Frequency Division Multiplexing) symbols, or a plurality of SC-FDMA (Single Carrier Frequency Division Multiple Access) symbols.

As one embodiment, the phrase that radio link quality is evaluated according to the first BFD-RS set includes: radio link quality obtained by measuring at least one RS resource in the first BFD-RS set.

As one embodiment, the phrase that radio link quality is evaluated according to the first BFD-RS set includes: radio link quality obtained by measuring each RS resource in the first BFD-RS set.

As one embodiment, the phrase that radio link quality is evaluated according to the first BFD-RS set includes: radio link quality obtained by measuring at least one RS resource in one subset of the first BFD-RS set.

As one embodiment, the phrase that radio link quality is evaluated according to the first BFD-RS set includes: radio link quality obtained by measuring each RS resource in one subset of the first BFD-RS set.

As one embodiment, when the radio link quality evaluated according to the first BFD-RS set is worse than the first threshold, the first counter is increased by 1.

As one embodiment, when the radio link quality evaluated according to the first BFD-RS set is worse than the first threshold, a physical layer of the first node sends one first indication to an MAC sublayer of the first node. When the MAC sublayer of the first node receives the first indication, the first counter is increased by 1.

As one embodiment, when the radio link quality evaluated according to the first BFD-RS set during the first evaluation period is worse than the first threshold, the physical layer of the first node sends one first indication to the MAC sublayer of the first node during a reporting period corresponding to the first evaluation period. When the MAC sublayer of the first node receives the first indication, the first counter is increased by 1.

As one embodiment, the first indication is one beam failure instance indication for the first BFD-RS set.

As one embodiment, the first indication is used for indicating that a beam failure instance for the first BFD-RS set has been detected.

As one embodiment, radio link quality is evaluated according to the second BFD-RS set during each second evaluation period.

As one embodiment, the second evaluation period includes a time interval of at least 1 millisecond (ms).

As one embodiment, the second evaluation period is 1 frame.

As one embodiment, the second evaluation period is 1 radio frame.

As one embodiment, the second evaluation period includes at least 1 slot, and the slot includes at least one of a solt, or a subframe, or a radio frame, or a frame, or a plurality of OFDM (Orthogonal Frequency Division Multiplexing) symbols, or a plurality of SC-FDMA (Single Carrier Frequency Division Multiple Access) symbols.

As one embodiment, the phrase that radio link quality is evaluated according to the second BFD-RS set includes: radio link quality obtained by measuring at least one RS resource in the second BFD-RS set.

As one embodiment, the phrase that radio link quality is evaluated according to the second BFD-RS set includes: radio link quality obtained by measuring each RS resource in the second BFD-RS set.

As one embodiment, the phrase that radio link quality is evaluated according to the second BFD-RS set includes: radio link quality obtained by measuring at least one RS resource in one subset of the second BFD-RS set.

As one embodiment, the phrase that radio link quality is evaluated according to the second BFD-RS set includes: radio link quality obtained by measuring each RS resource in one subset of the second BFD-RS set.

As one embodiment, when the radio link quality evaluated according to the second BFD-RS set is worse than the second threshold, the second counter is increased by 1.

As one embodiment, when the radio link quality evaluated according to the second BFD-RS set is worse than the second threshold, the physical layer of the first node sends one second indication to the MAC sublayer of the first node. When the MAC sublayer of the first node receives the second indication, the second counter is increased by 1.

As one embodiment, when the radio link quality evaluated according to the second BFD-RS set during the second evaluation period is worse than the second threshold, the physical layer of the first node sends one second indication to the MAC sublayer of the first node during a reporting period corresponding to the second evaluation period. When the MAC sublayer of the first node receives the second indication, the second counter is increased by 1.

As one embodiment, the second indication is one beam failure instance indication for the second BFD-RS set.

As one embodiment, the second indication is used for indicating that a beam failure instance for the second BFD-RS set has been detected.

As one embodiment, the reporting period includes at least 1 slot.

As one embodiment, the reporting period is 2 milliseconds.

As one embodiment, the reporting period is 10 milliseconds.

As one embodiment, the reporting period is the shortest period for all RS resources in one RS resource subgroup.

As one embodiment, when the first counter reaches the first value, one of the first BFRs is triggered.

As one embodiment, as long as the first counter reaches the first value, one of the first BFRs is triggered.

As one embodiment, at least when the first counter reaches the first value, one of the first BFRs is triggered.

As one embodiment, when the second counter reaches the second value, one of the second BFRs is triggered.

As one embodiment, as long as the second counter reaches the second value, one of the second BFRs is triggered.

As one embodiment, at least when the second counter reaches the second value, one of the second BFRs is triggered.

As one embodiment, the first BFR is one BFR.

As one embodiment, the second BFR is one BFR.

As one embodiment, the first BFR is one BFR for the first cell, and the second BFR is one BFR for the first cell.

As one embodiment, the first BFR is one BFR for the first cell, and the second BFR is one BFR for the second cell.

As one embodiment, the first BFR is one BFR for the first BFD-RS set, and the second BFR is one BFR for the second BFD-RS set.

As one embodiment, the first BFR is one BFR for the first BFD-RS set for the first cell, and the second BFR is one BFR for the second BFD-RS set for the first cell.

As one embodiment, the first BFR is one BFR for the first BFD-RS set for the first cell, and the second BFR is one BFR for the second BFD-RS set of the second cell.

As one embodiment, the first counter is one BFI_COUNTER.

As one embodiment, the second counter is one BFI_COUNTER.

As one embodiment, the first counter is one BFI_COUNTER for the first BFD-RS set, and the second counter is one BFI_COUNTER for the second BFD-RS set.

As one embodiment, the first counter and the second counter are different.

As one embodiment, the first value is one beamFailureInstanceMaxCount.

As one embodiment, the first value is one beamFailureInstanceMaxCount for the first BFD-RS set.

As one embodiment, the second value is one beamFailureInstanceMaxCount.

As one embodiment, the second value is one beamFailureInstanceMaxCount for the first BFD-RS set.

As one embodiment, the first value and the second value are the same.

As one embodiment, the first value and the second value are different.

As one embodiment, the first value and the second value are configured by the same RRC field.

As one embodiment, the first value and the second value are configured by two different RRC fields.

As one embodiment, the "reach" means being equal to.

As one embodiment, the "reach" means being equal to or being greater than.

As one embodiment, the "reach" means being not smaller than.

As one embodiment, the target RS resource is one RS resource in a first RS resource set.

As one embodiment, the first RS resource set comprises at least one RS resource.

As one sub-embodiment of this embodiment, each RS resource in the first RS resource set is configured by broadcasting.

As one sub-embodiment of this embodiment, each RS resource in the first RS resource set is configured by a system message.

As one sub-embodiment of this embodiment, each RS resource in the first RS resource set is configured by cell-common signaling.

As one sub-embodiment of this embodiment, each RS resource in the first RS resource set is configured by UE-specific signaling.

As one sub-embodiment of this embodiment, each RS resource in the first RS resource set is configured to the same uplink carrier.

As one sub-embodiment of this embodiment, each RS resource in the first RS resource set is configured to the same BWP.

As one sub-embodiment of this embodiment, each RS resource in the first RS resource set is on the same uplink carrier.

As one sub-embodiment of this embodiment, each RS resource in the first RS resource set is on the same BWP.

As one sub-embodiment of this embodiment, each RS resource in the first RS resource set is an SSB.

As one sub-embodiment of this embodiment, each RS resource in the first RS resource set is a CSI-RS resource.

As one sub-embodiment of this embodiment, each RS resource in the first RS resource set is an SSB or CSI-RS resource.

As one embodiment, the first RS resource set comprises each SSB over the first cell.

As one embodiment, the first RS resource set consists of all SSBs over the first cell.

As one embodiment, the first RS resource set comprises each SSB on one uplink carrier over the first cell.

As one embodiment, the first RS resource set comprises each SSB on one BWP on one uplink carrier over the first cell.

As one embodiment, each RS resource in the first RS resource set is configured by BWP-Uplink IE.

As one embodiment, each RS resource in the first RS resource set is configured by UplinkConfigCommon IE.

As one embodiment, each RS resource in the first RS resource set is configured by UplinkConfigCommonSIB IE.

As one embodiment, each RS resource in the first RS resource set is configured by BWP-UplinkCommon IE.

As one embodiment, each RS resource in the first RS resource set is configured by RACH-ConfigCommon IE.

As one embodiment, each RS resource in the first RS resource set is configured by RACH-ConfigCommonTwoStepRA IE.

As one embodiment, each RS resource in the first RS resource set is configured by RACH-ConfigDedicated IE.

As one embodiment, each RS resource in the first RS resource set is configured by RACH-ConfigGeneric IE.

As one embodiment, each RS resource in the first RS resource set is configured by RACH-ConfigGenericTwoStepRA IE.

As one embodiment, each RS resource in the first RS resource set is configured by BeamFailureRecoveryConfig IE.

As one embodiment, the first RS resource set is indicated by a candidateBeamRSList field in one BeamFailureRecoveryConfig IE.

As one embodiment, the first RS resource set comprises each SSB resource or CSI-RS resource indicated by a candidateBeamRSList field in one BeamFailureRecoveryConfig IE.

As one embodiment, each RS resource in the first RS resource set is configured with an index of one Preamble.

As one embodiment, each RS resource in the first RS resource set is indicated by one BFR-SSB-Resource field or one BFR-CSIRS-Resource field.

As one embodiment, at least one information block is used for configuring the first RS resource set. Any information block in the at least one information block indicates an index of one RS resource in the first RS resource set and an index of a Preamble associated with the one RS resource.

As one sub-embodiment of this embodiment, any information block in the at least one information block is one RRC field.

As one sub-embodiment of this embodiment, any information block in the at least one information block is one RRC IE.

As one sub-embodiment of this embodiment, the at least one information block is configured to the first cell.

As one sub-embodiment of this embodiment, the at least one information block is configured to one UL BWP.

As one sub-embodiment of this embodiment, the at least one information block belongs to one BWP-UplinkDedicated IE.

As one sub-embodiment of this embodiment, the at least one information block belongs to one BeamFailureRecoveryConfig IE.

As one sub-embodiment of this embodiment, the at least one information block belongs to one candidateBeamRSList field.

As one sub-embodiment of this embodiment, the at least one information block belongs to one RRC field whose name comprises candidateBeamRSList.

As one sub-embodiment of this embodiment, any information block in the at least one information block is one BFR-SSB-Resource field or one BFR-CSIRS-Resource field.

As one sub-embodiment of this embodiment, a name of any information block in the at least one information block comprises BFR-SSB-Resource or BFR-CSIRS-Resource.

As one sub-embodiment of this embodiment, the first information block is one information block of the at least one information block, and the first information block indicates an index of the target RS resource and an index of the first Preamble.

As one sub-embodiment of this embodiment, the first information block is one BFR-SSB-Resource field.

As one sub-embodiment of this embodiment, the first information block is one BFR-CSIRS-Resource field.

As one sub-embodiment of this embodiment, a name of the first information block comprises BFR-SSB-Resource.

As one sub-embodiment of this embodiment, a name of the first information block comprises BFR-CSIRS-Resource.

As one embodiment, along with the behavior of considering that the first random access procedure has been successfully completed, a target BFR is canceled.

As one embodiment, the target BFR is each of the first BFRs that are pending and each of the second BFRs that are pending.

As one embodiment, the target BFR is one of each of the first BFRs that are pending and each of the second BFRs that are pending.

As one embodiment, the target BFR is each of BFRs that are pending for a BFD-RS set associated with the target RS resource.

As one embodiment, the target BFR is each of the first BFRs that are triggered and each of the second BFRs that are triggered.

As one embodiment, the target BFR is one of each of the first BFRs that are triggered and each of the second BFRs that are triggered.

As one embodiment, the target BFR is each of BFRs that are triggered for a BFD-RS set associated with the target RS resource.

### Embodiment 1A

Embodiment 1A illustrates a flowchart of a transmission of a first Preamble according to one embodiment of the present application, as shown in FIG. 1A. In FIG. 1A, each block represents one step, and it should be particularly emphasized that the order of the blocks in the figure does not represent the chronological relationship between the steps represented.

In Embodiment 1A, a first node in the present application initiates a first random access procedure over a first cell in step 101A; determines a target RS resource in a first RS resource group in step 102A; and sends a first Preamble in step 103A, the first Preamble being associated with the target RS resource, wherein the first RS resource group is one proper subset of a first RS resource set, and the first RS resource set comprises at least one RS resource; and the first RS resource set is configured to the first cell.

As one embodiment, the first cell is one SpCell.

As one embodiment, the first cell is one SCell.

As one embodiment, the first random access procedure is triggered by a physical layer.

As one embodiment, the first random access procedure is triggered by an MAC sublayer.

As one embodiment, the first random access procedure is triggered by an RRC sublayer.

As one embodiment, the first random access procedure is triggered by a PDCCH order.

As one embodiment, the first random access procedure is triggered by a BFR.

As one embodiment, the first random access procedure is for a TAG associated with the first RS resource group.

As one embodiment, the first random access procedure is for a TAG to which the first RS resource group belongs.

As one embodiment, the first random access procedure is for a BFD-RS set associated with the first RS resource group.

As one embodiment, the TAG is a timing advance group.

As one embodiment, the TAG is a time alignment group.

### Embodiment 2

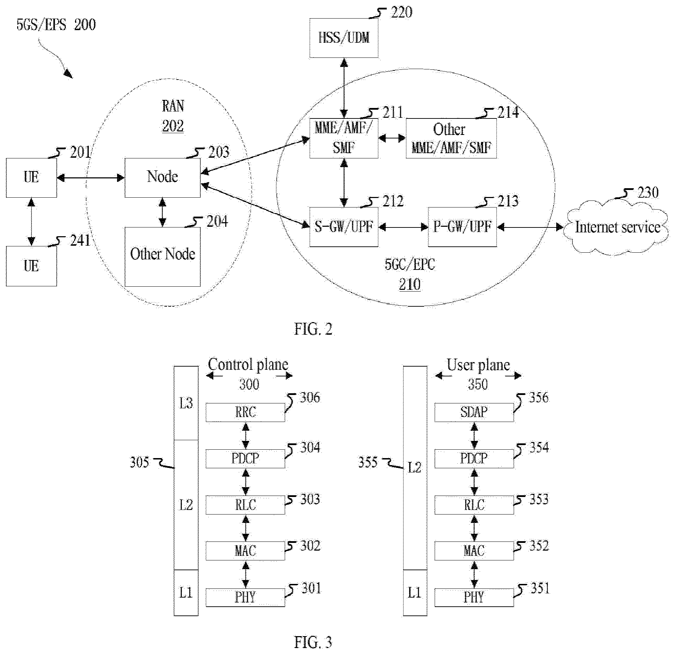

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as a 5GS (5G System)/EPS (Evolved Packet System) 200 or some other suitable terminologies. The 5GS/EPS 200 comprises at least one of UE (User Equipment) 201, an RAN (Radio Access Network) 202, a 5GC (5G Core Network)/EPC (Evolved Packet Core) 210, an HSS (Home Subscriber Server)/UDM (Unified Data Management) 220, and an Internet service 230. The 5GS/EPS may be interconnected with other access networks, but these entities/interfaces are not shown for simplicity. As shown, the 5GS/EPS provides packet switching services, but those skilled in the art will readily appreciate that the various concepts presented throughout the present application may be extended to networks that provide circuit switching services or other cellular networks. The RAN comprises a node 203 and other nodes 204. The node 203 provides user and control plane protocol termination towards the UE201. The node 203 may be connected to other nodes 204 via an Xn interface (e.g., backhaul)/X2 interface. The node 203 may also be referred to as a base station, a base transceiver station, a radio base station, a radio transceiving device, a transceiving device function, a basic service set (BSS), an extended service set (ESS), a TRP (transmitter receiver point), or some other suitable terminologies. The node 203 provides an access point to the 5GC/EPC210 for the UE201. Examples of the UE201 comprise a cellular phone, a smart phone, a session initiation protocol (SIP) phone, a laptop computer, a personal digital assistant (PDA), a satellite radio, a non-terrestrial base station communication, a satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The node 203 is connected to the 5GC/EPC210 via an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are conveyed through the S-GW/UPF212, and the S-GW/UPF212 is connected to the P-GW/UPF213 by itself. The P-GW provides UE IP address allocation and other functions. The P-GW/UPF213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, the UE201 corresponds to the first node in the present application.

As one embodiment, the UE201 is one piece of user equipment (UE).

As one embodiment, the node 203 corresponds to the second node in the present application.

As one embodiment, the node 203 is one base station device (BaseStation, BS).

As one embodiment, the node 203 is one base transceiver station (BTS).

As one embodiment, the node 203 is one node B (NodeB, NB).

As one embodiment, the node 203 is one gNB.

As one embodiment, the node 203 is one eNB.

As one embodiment, the node 203 is one ng-eNB.

As one embodiment, the node 203 is one en-gNB.

As one embodiment, the node 203 is one CU (Centralized Unit).

As one embodiment, the node 203 is one DU (Distributed Unit).

As one embodiment, the node 203 is user equipment.

As one embodiment, the node 203 is one relay.

As one embodiment, the node 203 is a gateway.

As one embodiment, the user equipment supports a transmission of a non-terrestrial network (NTN).

As one embodiment, the user equipment supports a transmission of a terrestrial network (TN).

As one embodiment, the user equipment supports a transmission in a network with a large delay difference.

As one embodiment, the user equipment supports a dual connection (DC) transmission.

As one embodiment, the user equipment comprises an aircraft.

As one embodiment, the user equipment comprises a vehicle terminal.

As one embodiment, the user equipment comprises a ship.

As one embodiment, the user equipment comprises an Internet of Things terminal.

As one embodiment, the user equipment comprises an industrial Internet of Things terminal.

As one embodiment, the user equipment comprises a device supporting a low-delay and high-reliability transmission.

As one embodiment, the user equipment comprises a test device.

As one embodiment, the user equipment comprises a signaling tester.

As one embodiment, the base station device supports a transmission in the non-terrestrial network.

As one embodiment, the base station device supports a transmission in the network with a large delay difference.

As one embodiment, the base station device supports a transmission in the terrestrial network.

As one embodiment, the base station device comprises a macro cellular base station.

As one embodiment, the base station device comprises a micro cell base station.

As one embodiment, the base station device comprises a pico cell base station.

As one embodiment, the base station device comprises a femtocell base station.

As one embodiment, the base station device comprises a base station device supporting a large delay difference.

As one embodiment, the base station device comprises a flying platform device.

As one embodiment, the base station device comprises a satellite device.

As one embodiment, the base station device comprises a TRP (Transmitter Receiver Point).

As one embodiment, the base station device comprises a CU.

As one embodiment, the base station device comprises a DU.

As one embodiment, the base station device comprises a test device.

As one embodiment, the base station device comprises a signaling tester.

As one embodiment, the base station device comprises an IAB (Integrated Access and Backhaul)-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the relay comprises a relay.

As one embodiment, the relay comprises an L3 relay.

As one embodiment, the relay comprises an L2 relay.

As one embodiment, the relay comprises a router.

As one embodiment, the relay comprises a switch.

As one embodiment, the relay comprises user equipment.

As one embodiment, the relay comprises a base station device.

### Embodiment 3

Embodiment 3 shows a schematic diagram of an embodiment of one wireless protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 using three layers: a Layer 1, a Layer 2, and a Layer 3. The Layer 1 (L1 layer) is the lowest layer and implements various PHY (physical layer) signal processing functions. The L1 layer will be referred to as a PHY301 herein. The Layer 2 (L2 layer) 305 is above the PHY301 and comprises an MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security by encrypting data packets, and provides handover support. The RLC sublayer 303 provides segmentation and reassembly of upper-layer data packets, a retransmission of lost data packets, and reordering of data packets to compensate for out-of-order reception due to an HARQ (Hybrid Automatic Repeat Request). The MAC sublayer 302 provides multiplexing between logical and transport channels. The MAC sublayer 302 is also responsible for allocating various radio resources (e.g., resource blocks) in one cell. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using RRC signaling. The radio protocol architecture for the user plane 350 comprises a Layer 1 (L1 layer) and a Layer 2 (L2 layer). The radio protocol architecture in the user plane 350 is substantially the same as the corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for the upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services.

As one embodiment, the wireless protocol architecture in FIG. 3 is applicable to the first node in the present application.

As one embodiment, the wireless protocol architecture in FIG. 3 is applicable to the second node in the present application.

As one embodiment, the first BFR in the present application is triggered at the MAC302 or the MAC352.

As one embodiment, the first Preamble in the present application is generated at the PHY301 or PHY351.

As one embodiment, the first signaling in the present application is generated at the RRC306.

As one embodiment, the first signaling in the present application is generated at the MAC302 or MAC352.

As one embodiment, the first signaling in the present application is generated at the PHY301 or PHY351.

As one embodiment, the second signaling in the present application is generated at the RRC306.

As one embodiment, the second signaling in the present application is generated at the MAC302 or MAC352.

As one embodiment, the second signaling in the present application is generated at the PHY301 or PHY351.

As one embodiment, the first MAC CE in the present application is generated at the MAC302 or MAC352.

### Embodiment 4

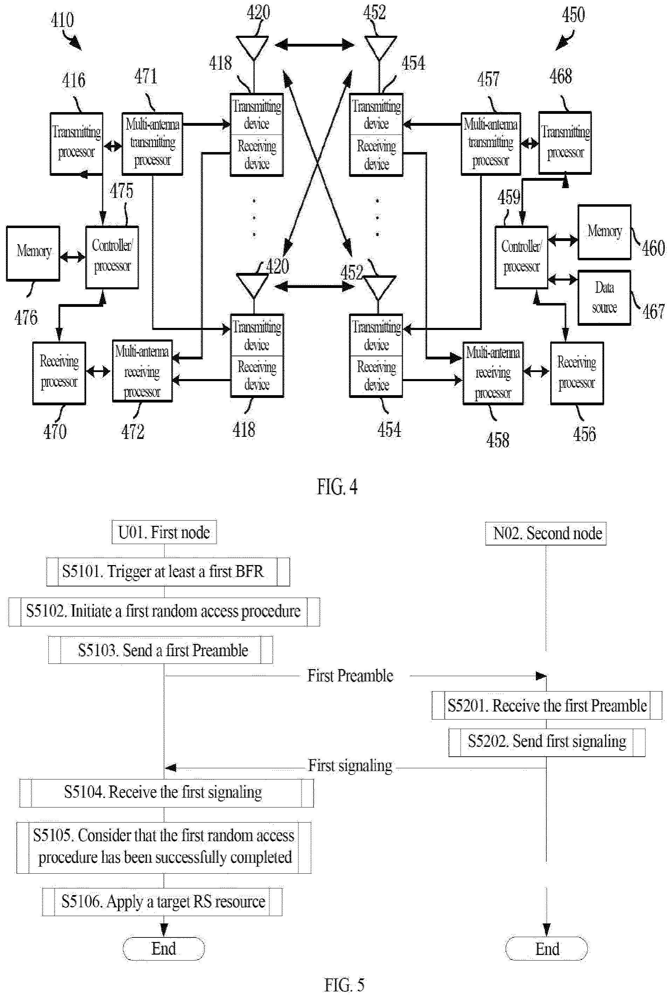

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In a transmission from the second communication device 410 to the first communication device 450, at the second communication device 410, upper-layer data packets from a core network are provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for a retransmission of lost packets and signaling to the first communication device 450. The transmitting processor 416 and the multi-antenna transmitting processor 471 implement various signal processing functions for an L1 layer (i.e., physical layer). The transmitting processor 416 implements encoding and interleaving to facilitate forward error correction (FEC) at the second communication device 410, as well as mapping of signal clusters based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on symbols after encoding and modulation to generate one or more spatial streams. The transmitting processor 416 then maps each spatial stream to a subcarrier, conducts multiplexing with a reference signal (e.g., pilot frequency) in a time domain and/or frequency domain, and then uses an inverse fast Fourier transform (IFFT) to produce a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the second communication device 410 to the first communication device 450, at the first communication device 450, each receiving device 454 receives a signal through a corresponding antenna 452 thereof. Each receiving device 454 recovers information modulated onto a radio frequency carrier, converts the radio frequency stream into a baseband multi-carrier symbol stream, and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream from the time domain to the frequency domain after the receiving analog precoding/beamforming operation. In the frequency domain, a physical layer data signal and a reference signal are demultiplexed by the receiving processor 456, wherein the reference signal will be used for channel estimation, and any spatial stream destined for the first communication device 450 is recovered from the data signal after multi-antenna detection in the multi-antenna receiving processor 458. The symbols on each spatial stream are demodulated and recovered in the receiving processor 456, and soft decisions are generated. The receiving processor 456 then decodes and deinterleaves the soft decisions to recover upper-layer data and control signals transmitted by the second communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to an L3 for L3 processing.

In a transmission from the first communication device 450 to the second communication device 410, at the first communication device 450, the upper-layer data packets are provided to the controller/processor 459 using the data source 467. The data source 467 represents all protocol layers above the L2 layer. Similar to the sending function at the second communication device 410 described in the transmission from the second communication device 410 to the first communication device 450, the controller/processor 459 implements header compression, encryption, packet segmentation and reordering, and multiplexing between logical and transport channels based on radio resource allocation, and implements the functions of the L2 layer for the user plane and the control plane. The controller/processor 459 is also responsible for a retransmission of lost packets and signaling to the second communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the produced spatial stream into a multi-carrier/single-carrier symbol stream, which is provided to different antennas 452 by the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from the UE450. The upper-layer data packets from the controller/processor 475 may be provided to the core network.

As one embodiment, the first communication device 450 comprises: at least one processor and at least one memory, the at least one memory comprising a computer program code; the at least one memory and the computer program code are configured to be used together with the at least one processor; and the first communication device 450 at least: initiates a first random access procedure when at least a first BFR is triggered; sends a first Preamble in the first random access procedure, the first Preamble being associated with a target RS resource; receives first signaling, in response to the first signaling being received, considers that the first random access procedure has been successfully completed; and along with a behavior of considering that the first random access procedure has been successfully completed, applies the target RS resource, wherein a first BFD-RS set and a second BFD-RS set for a first cell are configured for a first node, and the first cell is one SpCell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

As one embodiment, the first communication device 450 comprises: a memory storing a computer-readable instruction program, the computer-readable instruction program generating an action when executed by at least one processor, and the action comprising: initiating a first random access procedure when at least a first BFR is triggered; sending a first Preamble in the first random access procedure, the first Preamble being associated with a target RS resource; receiving first signaling; in response to the first signaling being received, considering that the first random access procedure has been successfully completed; and along with a behavior of considering that the first random access procedure has been successfully completed, applying the target RS resource, wherein a first BFD-RS set and a second BFD-RS set for a first cell are configured for a first node, and the first cell is one SpCell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

As one embodiment, the second communication device 410 comprises: at least one processor and at least one memory, the at least one memory comprising a computer program code; and the at least one memory and the computer program code are configured to be used together with the at least one processor. The second communication device 410 at least: receives a first Preamble in a first random access procedure, the first Preamble being associated with a target RS resource; and sends first signaling, wherein the first random access procedure is initiated when at least a first BFR is triggered; in response to the first signaling being received, the first random access procedure is considered to have been successfully completed; along with the first random access procedure being considered to have been successfully completed, the target RS resource is applied; a first BFD-RS set and a second BFD-RS set for a first cell are configured for a first node, and the first cell is one SpCell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

As one embodiment, the second communication device 410 comprises: a memory storing a computer-readable instruction program, the computer-readable instruction program generating an action when executed by at least one processor, and the action comprising: receiving a first Preamble in a first random access procedure, the first Preamble being associated with a target RS resource; and sending first signaling, wherein the first random access procedure is initiated when at least a first BFR is triggered; in response to the first signaling being received, the first random access procedure is considered to have been successfully completed; along with the first random access procedure being considered to have been successfully completed, the target RS resource is applied; a first BFD-RS set and a second BFD-RS set for a first cell are configured for a first node, and the first cell is one SpCell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

As one embodiment, the first communication device 450 comprises: at least one processor and at least one memory, the at least one memory comprising a computer program code; the at least one memory and the computer program code are configured to be used together with the at least one processor, and the first communication device 450 at least: initiates a first random access procedure over a first cell; determines a target RS resource in a first RS resource group; and sends a first Preamble, the first Preamble being associated with the target RS resource. wherein the first RS resource group is one proper subset of a first RS resource set, and the first RS resource set comprises at least one RS resource; and the first RS resource set is configured to the first cell.

As one embodiment, the first communication device 450 comprises: a memory storing a computer-readable instruction program, the computer-readable instruction program generating an action when executed by at least one processor, and the action comprising: initiating a first random access procedure over a first cell; determining a target RS resource in a first RS resource group; and sending a first Preamble, the first Preamble being associated with the target RS resource, wherein the first RS resource group is one proper subset of a first RS resource set, and the first RS resource set comprises at least one RS resource; and the first RS resource set is configured to the first cell.

As one embodiment, the second communication device 410 comprises: at least one processor and at least one memory, the at least one memory comprising a computer program code; and the at least one memory and the computer program code are configured to be used together with the at least one processor. The second communication device 410 at least: receives a first Preamble, the first Preamble being associated with a target RS resource, wherein the first random access procedure is initiated over a first cell; the target RS resource is determined in a first RS resource group; the first RS resource group is one proper subset of a first RS resource set, and the first RS resource set comprises at least one RS resource; and the first RS resource set is configured to the first cell.

As one embodiment, the second communication device 410 comprises: a memory storing a computer-readable instruction program, the computer-readable instruction program generating an action when executed by at least one processor, and the action comprising: receiving a first Preamble, the first Preamble being associated with a target RS resource, wherein the first random access procedure is initiated over a first cell; the target RS resource is determined in a first RS resource group; the first RS resource group is one proper subset of a first RS resource set, and the first RS resource set comprises at least one RS resource; and the first RS resource set is configured to the first cell.

As one embodiment, at least one of the antenna 452, the receiving device 454, the receiving processor 456, and the controller/processor 459 is used for receiving first signaling.

As one embodiment, at least one of the antenna 420, the transmitting device 418, the transmitting processor 416, and the controller/processor 475 is used for sending first signaling.

As one embodiment, at least one of the antenna 452, the receiving device 454, the receiving processor 456, and the controller/processor 459 is used for receiving second signaling.

As one embodiment, at least one of the antenna 420, the transmitting device 418, the transmitting processor 416, and the controller/processor 475 is used for sending second signaling.

As one embodiment, at least one of the antenna 452, the transmitting device 454, the transmitting processor 468, and the controller/processor 459 is used for sending a first Preamble.

As one embodiment, at least one of the antenna 420, the receiving device 418, the receiving processor 470, and the controller/processor 475 is used for receiving a first Preamble.

As one embodiment, at least one of the antenna 452, the transmitting device 454, the transmitting processor 468, and the controller/processor 459 is used for transmitting a first MAC CE.

As one embodiment, at least one of the antenna 420, the receiving device 418, the receiving processor 470, and the controller/processor 475 is used for receiving a first MAC CE.

As one embodiment, at least one of the antenna 452, the receiving device 454, the receiving processor 456, and the controller/processor 459 is used for receiving first DCI.

As one embodiment, at least one of the antenna 420, the transmitting device 418, the transmitting processor 416, and the controller/processor 475 is used for sending first DCI.

As one embodiment, the first communication device 450 corresponds to a first node in the present application.

As one embodiment, the second communication device 410 corresponds to a second node in the present application.

As one embodiment, the first communication device 450 is one piece of user equipment.

As one embodiment, the first communication device 450 is one base station device.

As one embodiment, the second communication device 410 is one piece of user equipment.

As one embodiment, the second communication device 410 is one base station device.

### Embodiment 5

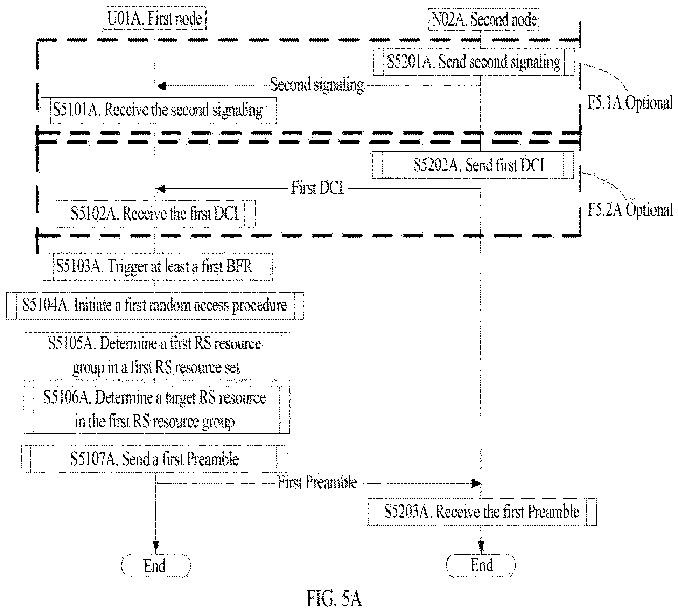

Embodiment 5 illustrates a flowchart of a wireless signal transmission according to one embodiment of the present application, as shown in FIG. 5. It should be particularly noted that the order in this example does not limit a signal transmission order and an implementation order in the present application.

For **a first node U01,** at least a first BFR is triggered in step S5101; a first random access procedure is initiated when at least a first BFR is triggered in step S5102; a first Preamble is sent in the first random access procedure in step S5103, the first Preamble being associated with a target RS resource; first signaling is received in step S5104; in response to the first signaling being received, the first random access procedure is considered to have been successfully completed in step S5105; and along with a behavior of considering that the first random access procedure has been successfully completed, the target RS resource is applied in step S5106.

For **a second node N02,** the first Preamble is received in step S5201; and the first signaling is sent in step S5202.

In Embodiment 5, a first BFD-RS set and a second BFD-RS set for a first cell are configured for a first node, and the first cell is one SpCell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

As one embodiment, the first node U01 is one piece of user equipment.

As one embodiment, the first node U01 is one base station device.

As one embodiment, the first node U01 is one relay device.

As one embodiment, the second node N02 is one base station device.

As one embodiment, the second node N02 is one piece of user equipment.

As one embodiment, the second node N02 is one relay device.

As one embodiment, the first node U01 is one piece of user equipment, and the second node N02 is one base station device.

As one embodiment, the first node U01 is one piece of user equipment, and the second node N02 is one piece of user equipment.

As one embodiment, the first node U01 is one base station device, and the second node N02 is one base station device.

As one embodiment, the second node N02 is a maintenance base station of the first cell.

As one embodiment, the second node N02 comprises at least a portion of a maintenance base station of the first cell and at least a portion of a maintenance base station of the second cell.

As one embodiment, the second node N02 comprises one TRP of a maintenance base station of the first cell and one TRP of a maintenance base station of the second cell.

As one embodiment, the second node N02 comprises a first TRP and a second TRP.

As one embodiment, the second node N02 comprises at least a first TRP and a second TRP.

As one embodiment, the first TRP and the second TRP both belong to the first cell.

As one embodiment, the first TRP belongs to the first cell, and the second TRP belongs to the second cell.

As one embodiment, the first TRP is used for maintaining the first BFD-RS set of the first cell, and the second TRP is used for maintaining the second BFD-RS set of the first cell.

As one embodiment, the first TRP is used for maintaining the first BFD-RS set of the first cell, and the second TRP is used for maintaining the second BFD-RS set of the second cell.

As one embodiment, a TRP used for receiving the first Preamble and a TRP used for sending the first signaling are the same.

As one embodiment, the TRP used for receiving the first Preamble and the TRP used for sending the first signaling are different.

As one embodiment, the first TRP is used for receiving the first Preamble, and the first TRP is used for sending the first signaling.

As one embodiment, the first TRP is used for receiving the first Preamble, and the second TRP is used for sending the first signaling.

As one embodiment, the second TRP is used for receiving the first Preamble, and the second TRP is used for sending the first signaling.

As one embodiment, the second TRP is used for receiving the first Preamble, and the first TRP is used for sending the first signaling.

As one embodiment, the first RS resource set is associated with the first TRP and the second TRP.

As one embodiment, the first RS resource set is associated with at least one of the first TRP and the second TRP.

### Embodiment 5A

Embodiment 5A illustrates a flowchart of a wireless signal transmission according to one embodiment of the present application, as shown in FIG. 5A. It should be particularly noted that the order in this example does not limit a signal transmission order and an implementation order in the present application.

For **a first node U01A**, second signaling is received in step S5101A, the second signaling being used for indicating a first RS resource group in a first RS resource set; first DCI is received in step S5102A; at least a first BFR is triggered in step S5103A; a first random access procedure is initiated over a first cell in step S5104A; the first RS resource group in the first RS resource set is determined in step S5105A; a target RS resource in the first RS resource group is determined in step S5106A; and a first Preamble is sent in step S5107A, the first Preamble being associated with the target RS resource.

For **a second node N02A,** the second signaling is sent in step S5201A; the first DCI is sent in step S5202A; and the first Preamble is received in step S5203A.

In Embodiment 5A, the first RS resource group is one proper subset of the first RS resource set, and the first RS resource set comprises at least one RS resource; and the first RS resource set is configured to the first cell.

As one embodiment, the first node U01A is one piece of user equipment.

As one embodiment, the first node U01A is one base station device.

As one embodiment, the first node U01A is one relay device.

As one embodiment, the second node N02A is one base station device.

As one embodiment, the second node N02A is one piece of user equipment.

As one embodiment, the second node N02A is one relay device.

As one embodiment, the first node U01A is one piece of user equipment, and the second node N02A is one base station device.

As one embodiment, the first node U01A is one piece of user equipment, and the second node N02A is one piece of user equipment.

As one embodiment, the first node U01A is one base station device, and the second node N02A is one base station device.

As one embodiment, the second node N02A is a maintenance base station of the first cell.

As one embodiment, the second node N02A comprises at least a portion of a maintenance base station of the first cell and at least a portion of a maintenance base station of the second cell.

As one embodiment, the second node N02A comprises one TRP of a maintenance base station of the first cell and one TRP of a maintenance base station of the second cell.

As one embodiment, the second node N02A comprises a first TRP and a second TRP.

As one embodiment, the second node N02A comprises at least a first TRP and a second TRP.

As one embodiment, the first TRP and the second TRP both belong to the first cell.

As one embodiment, the first TRP belongs to the first cell, and the second TRP belongs to the second cell.

As one embodiment, the first RS resource set is associated with the first TRP and the second TRP.

As one embodiment, the first RS resource set is associated with at least one of the first TRP and the second TRP.

As one embodiment, the dotted block F5.1A is optional.

As one embodiment, the dotted block F5.1A exists.

As one embodiment, the dotted block F5.1A does not exist.

As one embodiment, the dotted block F5.2A is optional.

As one embodiment, the dotted block F5.2A exists.

As one sub-embodiment of this embodiment, one timing advance command (TAC) is received in the first random access procedure, the one timing advance command being associated with the first RS resource group.

As one sub-embodiment of this embodiment, the one timing advance command comprises at least one timing advance field.

As one sub-embodiment of this embodiment, the one timing advance command is indicated in one MAC RAR (Random Access Response).

As one sub-embodiment of this embodiment, the one timing advance command is indicated in one absolute timing advance command MAC CE.

As one sub-embodiment of this embodiment, the one timing advance command indicates a TAG ID.

As one sub-embodiment of this embodiment, the one timing advance command indicates the first RS resource group.

As one sub-embodiment of this embodiment, the one timing advance command does not indicate the first RS resource group.

As one sub-embodiment of this embodiment, the TRP used for receiving the first Preamble and the TRP used for receiving the first DCI are the same.

As one sub-embodiment of this embodiment, the TRP used for receiving the first Preamble and the TRP used for receiving the first DCI are different.

As one sub-embodiment of this embodiment, the first TRP is used for receiving the first Preamble, and the first TRP is used for receiving the first DCI.

As one sub-embodiment of this embodiment, the first TRP is used for receiving the first Preamble, and the second TRP is used for receiving the first DCI.

As one sub-embodiment of this embodiment, the second TRP is used for receiving the first Preamble, and the second TRP is used for receiving the first DCI.

As one sub-embodiment of this embodiment, the second TRP is used for receiving the first Preamble, and the first TRP is used for receiving the first DCI.

As one sub-embodiment of this embodiment, the first DCI is used for triggering the first random access procedure.

As one sub-embodiment of this embodiment, the first DCI is used for determining the first RS resource group.

As one sub-embodiment of this embodiment, the first DCI indicates the first RS resource group.

As one sub-embodiment of this embodiment, the first DCI is used for a PDCCH (Physical Downlink Control Channel) order.

As one sub-embodiment of this embodiment, the first DCI is one PDCCH order.

As one sub-embodiment of this embodiment, the first DCI is identified by a C-RNTI of the first node U01A in the first cell.

As one sub-embodiment of this embodiment, the first DCI is scrambled by a C-RNTI of the first node U01A in the first cell.

As one sub-embodiment of this embodiment, the first DCI is addressed to a C-RNTI of the first node U01A in the first cell.

As one sub-embodiment of this embodiment, a CRC of the first DCI is scrambled by a C-RNTI of the first node U01A in the first cell.

As one sub-embodiment of this embodiment, a format of the first DCI is DCI format 1_1.

As one sub-embodiment of this embodiment, a format of the first DCI is DCI format 1_0.

As one sub-embodiment of this embodiment, the first DCI comprises at least one

Identifier for DCI Formats field, and the one Identifier for DCI Formats field is set to 1.

As one embodiment, the first DCI comprises one Frequency Domain Resource Assignment field, and the one Frequency Domain Resource Assignment field is set to all 1.

As one embodiment, the first DCI indicates an air interface resource for the first Preamble.

As one sub-embodiment of this embodiment, the first DCI indicates an air interface resource used for the first Preamble.

As one sub-embodiment of this embodiment, the first DCI comprises at least one of one Random Access Preamble Index field, or one UL (Uplink)/SUL (Supplementary Uplink) Indicator field, or one SS/PBCH Index field, or one PRACH Mask Index field.

As one sub-embodiment of this embodiment, the first DCI does not comprise any one of the Random Access Preamble Index field, or the UL/SUL Indicator field, or the SS/PBCH Index field, or the PRACH Mask Index field.

As one sub-embodiment of this embodiment, the first DCI implicitly indicates the first RS resource group.

As one sub-embodiment of this embodiment, a spatial parameter of the first DCI indicates the first RS resource group.

As one sub-embodiment of this embodiment, the first DCI explicitly indicates the first RS resource group.

As one sub-embodiment of this embodiment, the first DCI comprises a first DCI field, and a value of the first DCI field is associated with the first RS resource group.

As one sub-embodiment of this embodiment, the value of the first DCI field is indexed to the first RS resource group.

As one sub-embodiment of this embodiment, the first DCI field indicates the first RS resource group.

As one sub-embodiment of this embodiment, the first DCI field indicates an identifier of the first RS resource group.

As one sub-embodiment of this embodiment, the first DCI field indicates an index of the first RS resource group in the first RS resource set.

As one sub-embodiment of this embodiment, the first DCI field indicates a position of the first RS resource group in the first RS resource set.

As one sub-embodiment of this embodiment, the first DCI field indicates a TAG to which the first RS resource group belongs.

As one sub-embodiment of this embodiment, the first DCI field indicates a TAG ID to which the first RS resource group belongs.

As one sub-embodiment of this embodiment, the first DCI field indicates a TRP to which the first RS resource group belongs.

As one sub-embodiment of this embodiment, the first DCI field indicates a TCI (Transmission Configuration Indicator) status to which the first RS resource group belongs.

As one sub-embodiment of this embodiment, the first DCI field occupies at least 1 bit.

As one sub-embodiment of this embodiment, the first DCI field occupies 2 bits.

As one sub-embodiment of this embodiment, the first DCI field occupies 3 bits.

As one sub-embodiment of this embodiment, the first DCI field occupies 4 bits.

As one embodiment, the dotted block F5.2A does not exist.

As one embodiment, the step S5103A is optional.

As one embodiment, the step S5103A exists.

As one sub-embodiment of this embodiment, at least a first BFR being triggered is used for triggering the first random access procedure; a first BFD-RS set and a second BFD-RS set are configured for a first cell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

As one embodiment, the step S5103A does not exist.

As one embodiment, the step S5105A is optional.

As one embodiment, the step S5105A exists.

As one sub-embodiment of this embodiment, the first RS resource group is determined in the first RS resource set according to the first DCI.

As one sub-embodiment of this embodiment, the first RS resource group is determined in the first RS resource set according to the first DCI field of the first DCI.

As one sub-embodiment of this embodiment, the first RS resource group is determined in the first RS resource set according to the first BFD-RS set.

As one sub-embodiment of this embodiment, the first RS resource group is determined in the first RS resource set according to an RSRP.

As one embodiment, the step S5105A does not exist.

### Embodiment 6

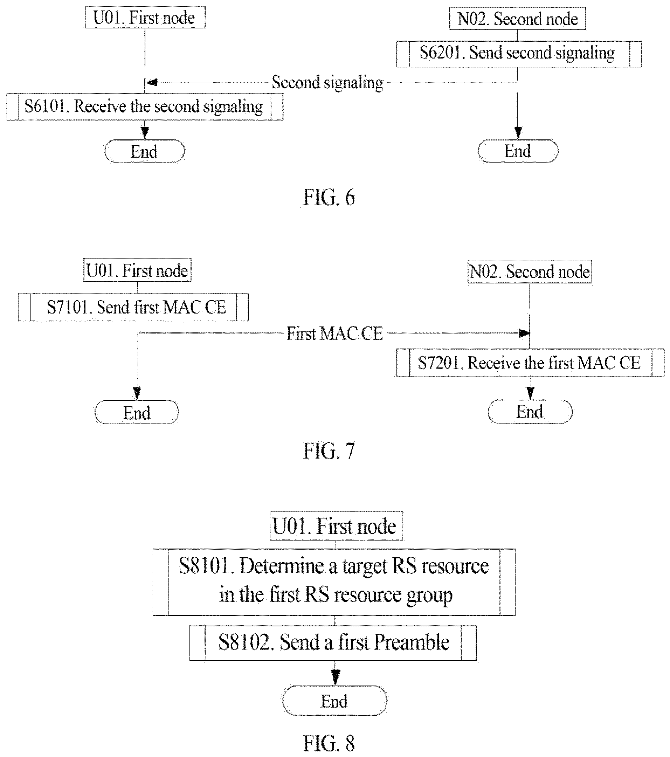

Embodiment 6 illustrates a flowchart of a wireless signal transmission according to another embodiment of the present application, as shown in FIG. 6. It should be particularly noted that the order in this example does not limit a signal transmission order and an implementation order in the present application.

For **a first node U01,** second signaling is received in step S6101.

For **a second node N02,** the second signaling is sent in step S6201.

In Embodiment 6, the second signaling is used for indicating the first RS resource group in the first RS resource set.

As one embodiment, the second signaling comprises at least one RRC message.

As one embodiment, the second signaling is one RRC message.

As one embodiment, the second signaling comprises at least one RRC IE.

As one embodiment, the second signaling comprises at least one RRC field.

As one embodiment, the second signaling indicates the first RS resource set, and the second signaling indicates the first RS resource group in the first RS resource set.

As one embodiment, the second signaling comprises the at least one information block.

As one embodiment, the second signaling is the at least one information block.

As one embodiment, the second signaling is used for explicitly indicating the first RS resource group in the first RS resource set.

As one embodiment, the second signaling is used for implicitly indicating the first RS resource group in the first RS resource set.

As one embodiment, the second signaling is used for indicating a plurality of Preamble groups, and an RS resource associated with each Preamble group in the plurality of Preamble groups belong to the same RS resource group.

As one embodiment, the first RS resource set comprises each RS resource associated with each Preamble group in the plurality of Preamble groups.

As one embodiment, the first RS resource set consists of each RS resource associated with each Preamble group in the plurality of Preamble groups.

As one embodiment, any two Preambles in any two Preamble groups are associated with different RS resources.

As one embodiment, the second signaling is used for dividing the first RS resource set into a plurality of RS resource groups, the first RS resource group being one of the plurality of RS resource groups.

As one embodiment, the second signaling is used for indicating a plurality of RS resource groups, the first RS resource set being the plurality of RS resource groups, and the first RS resource group being one of the plurality of RS resource groups.

As one embodiment, the at least one information block belongs to a plurality of upper-level information blocks, and the upper-level information block to which one of the at least one information block belongs is used for determining whether the RS resource indicated by the one information block belongs to the first RS resource group.

As one sub-embodiment of this embodiment, each upper-level information in the plurality of upper-level information blocks is one RRC field.

As one sub-embodiment of this embodiment, each upper-level information in the plurality of upper-level information blocks is one RRC IE.

As one sub-embodiment of this embodiment, each upper-level information block in the plurality of upper-level information blocks corresponds to one RS resource group.

As one sub-embodiment of this embodiment, each upper-level information block in the plurality of upper-level information blocks corresponds to one BFD-RS set.

As one sub-embodiment of this embodiment, each upper-level information block in the plurality of upper-level information blocks is used for determining one list.

As one sub-embodiment of this embodiment, each upper-level information block in the plurality of upper-level information blocks comprises one or more information blocks.

As one sub-embodiment of this embodiment, a name of each upper-level information block in the plurality of upper-level information blocks is different.

As one sub-embodiment of this embodiment, a name of the upper-level information block to which one information block of the at least one information block belongs is used for determining whether the RS resource indicated by the one information block belongs to the first RS resource group.

As one sub-embodiment of this embodiment, the plurality of upper-level information blocks belong to the same list. A name of each upper-level information block in the plurality of upper-level information blocks is the same.

As one sub-embodiment of this embodiment, a name of each upper-level information block in the plurality of upper-level information blocks comprises candidateBeamRSList.

As one sub-embodiment of this embodiment, a name of each upper-level information block in the plurality of upper-level information blocks comprises at least one of candidate, or Beam, or RS, or List, or 1, or 2, or r-17, or r-18, or r-19.

As one embodiment, whether one information block in the at least one information block comprises a first field is used for determining whether the RS resource indicated by the one information block belongs to the first RS resource group.

As one sub-embodiment of this embodiment, if one information block in the at least one information block comprises a first field, the RS resource indicated by the one information block belongs to the first RS resource group.

As one sub-embodiment of this embodiment, if one information block in the at least one information block does not comprise a first field, the RS resource indicated by the one information block does not belong to the first RS resource group.

As one embodiment, any information block in the at least one information block comprises a first field; and a value of a first field in one information block in the at least one information block is used for determining whether the RS resource indicated by the one information block belongs to the first RS resource group.

As one sub-embodiment of this embodiment, if the first field in one information block in the at least one information block is set to a first value, the RS resource indicated by the one information block belongs to the first RS resource group.

As one sub-embodiment of this embodiment, if the first field in one information block in the at least one information block is set to a value other than the first value, the RS resource indicated by the information block does not belong to the first RS resource group.

As one sub-embodiment of this embodiment, the first value corresponds to the first RS resource group.

As one sub-embodiment of this embodiment, the first value corresponds to the first BFD-RS set.

As one sub-embodiment of this embodiment, the first value is an index of the first BFD-RS set.

As one sub-embodiment of this embodiment, the first value corresponds to an index of the first RS resource group.

As one sub-embodiment of this embodiment, the first value is predefined.

As one sub-embodiment of this embodiment, the first value is configured.

As one sub-embodiment of this embodiment, the first value is one non-negative integer.

As one sub-embodiment of this embodiment, candidate values of the first value are 0 and 1.

As one embodiment, the index of the first RS resource group is 0.

As one embodiment, the index of the first RS resource group is 1.

As one embodiment, the first RS resource group is one RS resource group associated with the first BFD-RS set in the first RS resource set.

### Embodiment 7

Embodiment 7 illustrates a flowchart of a wireless signal transmission according to still another embodiment of the present application, as shown in FIG. 7. It should be particularly noted that the order in this example does not limit a signal transmission order and an implementation order in the present application.

For **a first node U01,** a first MAC CE is sent in the first random access procedure in step S7101.

For **a second node N02,** the first MAC CE is received in step S7201.

In Embodiment 7, the first MAC CE indicates that beam failures are detected for at least the first BFD-RS set and the second BFD-RS set, and the first MAC CE does not comprise a candidate RS ID of any one of the first BFD-RS set and the second BFD-RS set.

As one embodiment, along with a behavior of considering that the first random access procedure has been successfully completed, when the first MAC CE indicates that beam failures are detected for at least the first BFD-RS set and the second BFD-RS set, and the first MAC CE does not comprise beam failure information for any one of the first BFD-RS set and the second BFD-RS set, the target RS resource is applied.

As one embodiment, the behavior of sending the first MAC CE comprises: sending one MAC PDU (Protocol Data Unit), the one MAC PDU comprising the first MAC CE.

As one sub-embodiment of this embodiment, the one MAC PDU is Msg3 (Message 3).

As one sub-embodiment of this embodiment, the one MAC PDU is MSGA (Message A).

As one sub-embodiment of this embodiment, the MAC PDU to which the one MAC PDU belongs comprises one C-RNTI MAC CE, and the one C-RNTI MAC CE comprises one C-RNTI.

As one sub-embodiment of this embodiment, the MAC PDU to which the one MAC PDU belongs comprises one C-RNTI MAC CE, and the one C-RNTI MAC CE comprises the first C-RNTI.

As one embodiment, the first MAC CE is one BFR MAC CE.

As one embodiment, the first MAC CE is one Enhanced BFR MAC CE.

As one embodiment, the first MAC CE is one Truncated Enhanced BFR MAC CE.

As one embodiment, the first MAC CE belongs to one MAC PDU, the one MAC PDU comprises one MAC subheader, the one MAC subheader comprises one LCID (Logical Channel ID) field, and the one LCID field is set to 43.

As one embodiment, the first MAC CE belongs to one MAC PDU, the one MAC PDU comprises one MAC subheader, the one MAC subheader comprises one eLCID (extended LCID) field, and the one eLCID field is set to 235.

As one embodiment, the first MAC CE belongs to one MAC PDU, the one MAC PDU comprises one MAC subheader, the one MAC subheader comprises one eLCID field, and the one eLCID field is set to 236.

As one embodiment, the first MAC CE belongs to one MAC PDU, the one MAC PDU comprises one MAC subheader, the one MAC subheader comprises one eLCID field, and the one eLCID field is set to 237.

As one embodiment, the first MAC CE comprises one SP field, and the one SP field is set to 1.

As one embodiment, the first MAC CE comprises only one octet that comprises a Cᵢ field.

As one embodiment, the first MAC CE comprises only a single octet Cᵢ bitmap.

As one embodiment, the first MAC CE comprises only a single octet Sₖ bitmap.

As one embodiment, the first MAC CE comprises four octets comprising Cᵢ fields.

As one embodiment, the first MAC CE comprises four octet Cᵢ bitmaps.

As one embodiment, the first MAC CE comprises at least one octet Sₖ bitmaps.

As one embodiment, the first MAC CE comprises one S₀, and the S₀ is set to 1.

As one embodiment, the first MAC CE does not comprise a candidate RS ID for the first BFD-RS set, and the first MAC CE does not comprise a candidate RS ID for the second BFD-RS set.

As one embodiment, an AC field for one BFD-RS set in the first MAC CE being set to 0 is used for determining that the first MAC CE does not comprise a candidate RS ID for the one BFD-RS set.

As one embodiment, the first MAC CE not comprising an AC (availability indication) field for one BFD-RS set is used for determining that the first MAC CE does not comprise the candidate RS ID for the one BFD-RS set.

As one embodiment, the first MAC CE not comprising an octet to which an AC field for one BFD-RS set belongs is used for determining that the first MAC CE does not comprise the candidate RS ID for the one BFD-RS set.

As one embodiment, the first MAC CE not comprising beam failure recovery information for one BFD-RS group is used for determining that the first MAC CE does not comprise the candidate RS ID for the one BFD-RS set.

As one embodiment, the beam failure information means an octet that comprises an AC field.

As one embodiment, the beam failure information means an AC field.

As one embodiment, the beam failure information comprises an AC field and a candidate RS ID field.

As one embodiment, the beam failure information comprises an AC field, an ID field, and a candidate RS ID field.

As one embodiment, the phrase that at least a first BFR is triggered means that the first BFR is triggered and the second BFR is triggered.

As one embodiment, the phrase that at least a first BFR is triggered means that the first BFR is triggered, the second BFR is triggered, and any one of a beam failure recovery procedure for the first BFR and a beam failure recovery procedure for the second BFR has not been successfully completed.

As one embodiment, the first MAC CE does not comprise any AC field.

As one sub-embodiment of this embodiment, the first MAC CE does not comprise any octet that comprises an AC field.

As one sub-embodiment of this embodiment, the first MAC CE does not comprise an AC field for the first BFD-RS set, and the first MAC CE does not comprise an AC field for the second BFD-RS set.

As one sub-embodiment of this embodiment, the first MAC CE does not comprise a field used for indicating whether a candidate RS ID field exists.

As one sub-embodiment of this embodiment, the first MAC CE does not comprise a candidate RS ID field or a reserved bit.

As one embodiment, the first MAC CE comprises at least one AC field.

As one sub-embodiment of this embodiment, the first MAC CE comprises only one AC field.

As one sub-embodiment of this embodiment, the first MAC CE comprises an AC field for the first BFD-RS set, and the first MAC CE does not comprise an AC field for the second BFD-RS set, wherein the AC field for the first BFD-RS set is set to 0.

As one sub-embodiment of this embodiment, the first MAC CE does not comprise an AC field for the first BFD-RS set, and the first MAC CE comprises an AC field for the second BFD-RS set, wherein the AC field for the second BFD-RS set is set to 0.

As one sub-embodiment of this embodiment, the first MAC CE comprises an AC field for the first BFD-RS set and an AC field for the second BFD-RS set, wherein the AC field for the first BFD-RS set is set to 0, and the AC field for the second BFD-RS set is set to 0.

As one embodiment, if the AC field for one BFD-RS set is set to 0, the octet to which the AC field for the one BFD-RS set belongs does not comprise the candidate RS ID field for the one BFD-RS set.

As one embodiment, if the AC field for one BFD-RS set is set to 0, the Candidate RS ID field for the one BFD-RS set in the octet to which the AC field for the one BFD-RS set belongs is reserved.

### Embodiment 8

Embodiment 8 illustrates a flowchart of determining a target RS resource before a first Preamble is sent according to one embodiment of the present application, as shown in FIG. 8. It should be particularly noted that the order in this example does not limit a signal transmission order and an implementation order in the present application.

For **a first node U01,** the target RS resource in the first RS resource group is determined before a behavior of sending the first Preamble in step S8101; and the first Preamble is sent in step S8102.

As one embodiment, the first DCI is used for determining the first RS resource group.

As one embodiment, the first BFD-RS set is used for determining the first RS resource group.

As one embodiment, the second signaling is used for indicating the first RS resource group in the first RS resource set.

As one embodiment, the first node U01 determines the first RS resource group in the first RS resource set.

As one sub-embodiment of this embodiment, the first node U01 determines the first RS resource group in the first RS resource set according to a QCL relationship.

As one sub-embodiment of this embodiment, the first node U01 determines the first RS resource group according to an index of each RS resource in the first RS resource set.

As one sub-embodiment of this embodiment, the first node U01 determines the first RS resource group according to a position of each RS resource in the first RS resource set in one list.

As one sub-embodiment of this embodiment, the first node U01 determines the first RS resource group according to an antenna port of each RS resource in the first RS resource set.

As one embodiment, the behavior of determining the target RS resource in the first RS resource group comprises: selecting the target RS resource in the first RS resource group.

As one embodiment, the behavior of determining the target RS resource in the first RS resource group comprises: selecting any SSB in the first RS resource group, the target RS resource being any one of the SSBs that are selected.

As one embodiment, the behavior of determining the target RS resource in the first RS resource group comprises: selecting one SSB with an SS-RSRP (Reference Signal Received Power) higher than one threshold in the first RS resource group.

As one sub-embodiment of this embodiment, the one threshold is rsrp-ThresholdSSB.

As one sub-embodiment of this embodiment, the one threshold is configured by an rsrp-ThresholdSSB field.

As one sub-embodiment of this embodiment, the one threshold is configured by one RRC field outside of rsrp-ThresholdSSB.

As one sub-embodiment of this embodiment, an SS-RSRP of at least one SSB is higher than the one threshold.

As one sub-embodiment of this embodiment, an SSB having at least one SS-RSRP higher than the one threshold is available.

As one embodiment, the behavior of determining the target RS resource in the first RS resource group comprises: selecting one CSI-RS having a CSI-RSRP higher than another threshold in the first RS resource group.

As one sub-embodiment of this embodiment, the another threshold is rsrp-ThresholdCSI-RS.

As one sub-embodiment of this embodiment, the another threshold is configured by an rsrp-ThresholdCSI-RS field.

As one sub-embodiment of this embodiment, the another threshold is configured by one RRC field outside of rsrp-ThresholdCSI-RS.

As one sub-embodiment of this embodiment, a CSI-RSRP of at least one CSI-RS is higher than the another threshold.

As one sub-embodiment of this embodiment, a CSI-RS having at least one CSI-RSRP higher than the another threshold is available.

As one embodiment, the behavior of determining the target RS resource in the first RS resource group is performed in a random access resource selection procedure.

As one embodiment, the behavior of determining the target RS resource in the first RS resource group is performed before the random access resource selection procedure.

As one embodiment, the random access resource selection procedure is performed before the behavior of sending the first Preamble.

As one embodiment, the first Preamble is selected in the random access resource selection procedure.

As one embodiment, a PRACH occasion of the first Preamble is determined in the random access resource selection procedure.

As one embodiment, before the behavior of selecting the target RS resource in the first RS resource group, the first RS resource group is determined in the first RS resource set.

As one embodiment, before the behavior of selecting the target RS resource in the first RS resource group, the first RS resource group is selected in the first RS resource set.

As one embodiment, in response to the first random access procedure being triggered by the first BFR, the first RS resource group is selected in the first RS resource set.

As one embodiment, before the behavior of sending the first Preamble, the first RS resource group is determined in the first RS resource set.

As one embodiment, the behavior of determining the first RS resource group in the first RS resource set is performed in the random access resource selection procedure.

As one embodiment, the behavior of determining the first RS resource group in the first RS resource set is performed before the random access resource selection procedure.

As one embodiment, the behavior of determining the first RS resource group in the first RS resource set means: selecting the first RS resource group in the first RS resource set.

As one embodiment, the behavior of determining the first RS resource group in the first RS resource set means: determining the RS resources comprised in the first RS resource group in the first RS resource set.

As one embodiment, the behavior of determining the first RS resource group in the first RS resource set means: selecting the first RS resource group in a plurality of RS resource groups in the first RS resource set.

As one embodiment, before the behavior of determining the target RS resource in the first RS resource group, the first RS resource group is determined in the first RS resource set.

### Embodiment 9

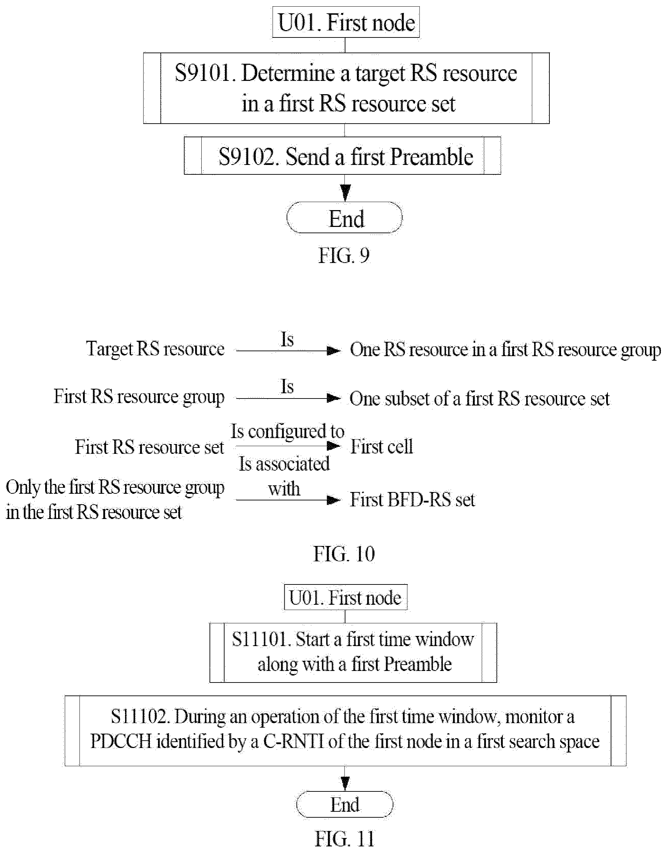

Embodiment 9 illustrates a flowchart of determining a target RS resource before a first Preamble is sent according to another embodiment of the present application, as shown in FIG. 9. It should be particularly noted that the order in this example does not limit a signal transmission order and an implementation order in the present application.

For **a first node U01,** the target RS resource is determined in the first RS resource set before a behavior of sending the first Preamble in step S9101; and the first Preamble is sent in step S9102.

As one embodiment, the behavior of determining the target RS resource in the first RS resource set is performed in a random access resource selection procedure.

As one embodiment, the behavior of determining the target RS resource in the first RS resource set is performed before the random access resource selection procedure.

As one embodiment, the random access resource selection procedure is performed before the behavior of sending the first Preamble.

As one embodiment, the first Preamble is selected in the random access resource selection procedure.

As one embodiment, a PRACH occasion of the first Preamble is determined in the random access resource selection procedure.

As one embodiment, the behavior of determining the target RS resource in the first RS resource set comprises: selecting the target RS resource in the first RS resource set.

As one embodiment, the behavior of determining the target RS resource in the first RS resource set comprises: selecting any SSB in the first RS resource set, the target RS resource being any one of the SSBs that are selected.

As one embodiment, the behavior of determining the target RS resource in the first RS resource set comprises: selecting one SSB with an SS-RSRP higher than one threshold in the first RS resource set.

As one sub-embodiment of this embodiment, the one threshold is rsrp-ThresholdSSB.

As one sub-embodiment of this embodiment, the one threshold is configured by an rsrp-ThresholdSSB field.

As one sub-embodiment of this embodiment, the one threshold is configured by one RRC field outside of rsrp-ThresholdSSB.

As one sub-embodiment of this embodiment, an SS-RSRP of at least one SSB is higher than the one threshold.

As one sub-embodiment of this embodiment, an SSB having at least one SS-RSRP higher than the one threshold is available.

As one embodiment, the behavior of determining the target RS resource in the first RS resource set comprises: selecting one CSI-RS having a CSI-RSRP greater than another threshold in the first RS resource set.

As one sub-embodiment of this embodiment, the another threshold is rsrp-ThresholdCSI-RS.

As one sub-embodiment of this embodiment, the another threshold is configured by an rsrp-ThresholdCSI-RS field.

As one sub-embodiment of this embodiment, the another threshold is configured by one RRC field outside of rsrp-ThresholdCSI-RS.

As one sub-embodiment of this embodiment, a CSI-RSRP of at least one CSI-RS is higher than the another threshold.

As one sub-embodiment of this embodiment, a CSI-RS having at least one CSI-RSRP higher than the another threshold is available.

### Embodiment 10

Embodiment 10 illustrates a schematic diagram of only a first RS resource group in a first RS resource set being associated with a first BFD-RS set according to one embodiment of the present application, as shown in FIG. 10.

In Embodiment 10, the target RS resource is one RS resource in a first RS resource group, the first RS resource group is one subset of a first RS resource set, and the first RS resource set comprises at least one RS resource; the first RS resource set is configured to the first cell; and only the first RS resource group in the first RS resource set is associated with the first BFD-RS set.

As one embodiment, the target RS resource is selected from the first RS resource group.

As one embodiment, the target RS resource is determined from the first RS resource group.

As one embodiment, the first RS resource set comprises only one RS resource group, the only one RS resource group being associated with the first BFD-RS set.

As one embodiment, the first RS resource set comprises a plurality of RS resource groups, the plurality of RS resource groups being orthogonal.

As one embodiment, the first RS resource set comprises a plurality of RS resource groups, the plurality of RS resource groups being not orthogonal.

As one embodiment, any RS resource in any RS resource group other than the first RS resource group in the first RS resource set is not associated with the first BFD-RS set.

As one embodiment, at least one RS resource in at least one RS resource group outside the first RS resource group in the first RS resource set is associated with the first BFD-RS set.

As one embodiment, any RS resource in the first RS resource group belongs to the first RS resource set.

As one embodiment, a quantity of RS resources comprised in the first RS resource group is not greater than the first RS resource set.

As one embodiment, a quantity of RS resources comprised in the first RS resource group is smaller than the first RS resource set.

As one embodiment, the first RS resource group is one proper subset of the first RS resource set.

As one embodiment, the first RS resource group is the first RS resource set.

As one embodiment, each RS resource in the first RS resource set belongs to the first cell.

As one embodiment, at least one RS resource in the first RS resource set belongs to the first cell.

As one embodiment, at least one RS resource in the first RS resource set belongs to the second cell.

As one embodiment, only each RS resource in the first RS resource group in the first RS resource set is associated with the first BFD-RS set.

As one embodiment, only each RS resource in the first RS resource group in the first RS resource set is associated with one RS resource in the first BFD-RS set.

As one embodiment, there is at least one RS resource in any RS resource group other than the first RS resource group in the first RS resource set being not associated with the first BFD-RS set.

As one embodiment, each RS resource in any RS resource group other than the first RS resource group in the first RS resource set is not associated with the first BFD-RS set.

### Embodiment 11

Embodiment 11 illustrates a flowchart of monitoring a PDCCH identified by a C-RNTI of a first node in a first search space according to one embodiment of the present application, as shown in FIG. 11. It should be particularly noted that the order in this example does not limit a signal transmission order and an implementation order in the present application.

For **a first node U01,** a first time window is started along with the first Preamble in step S11101; and during an operation of the first time window, a PDCCH identified by a C-RNTI of the first node U01 is monitored in a first search space in step S11102.

In Embodiment 11, during the operation of the first time window, the first signaling is received; and the first search space is used for BFR.

As one embodiment, the first random access procedure is one CFRA.

As one embodiment, the phrase of along with the first Preamble comprises: when the first Preamble is sent.

As one embodiment, the phrase of along with the first Preamble comprises: at least after the first Preamble is sent.

As one embodiment, the phrase of along with the first Preamble comprises: a first PDCCH occasion after sending of the first Preamble is ended.

As one embodiment, the first time window is used for monitoring a random access response.

As one embodiment, the first time window is used for determining a time of monitoring the PDCCH identified by the C-RNTI of the first node U01.

As one embodiment, the first time window is configured by UE-specific signaling.

As one embodiment, the monitoring comprises: detecting.

As one embodiment, the monitoring comprises: monitoring.

As one embodiment, the monitoring comprises: supervising.

As one embodiment, the monitoring comprises: receiving.

As one embodiment, the monitoring comprises: determining whether it exists.

As one embodiment, the first search space is one search space.

As one embodiment, the first search space is one USS (UE-specific search space).

As one embodiment, the first search space is indicated by one recoverySearchSpaceId.

As one embodiment, the first search space is indicated by one RRC field outside of recoverySearchSpaceId.

As one embodiment, the first search space is indicated by one RRC field whose name comprises recoverySearchSpaceId. The one RRC field is not recoverySearchSpaceld.

As one embodiment, the first search space is indicated by one RRC field whose name comprises at least one of recovery, or SearchSpace, or Id, or 1, or 2, or RS, or BFD, or set. The one RRC field is not recoverySearchSpaceId.

As one embodiment, the C-RNTI of the first node U01 is one C-RNTI of the first node U01.

As one embodiment, the C-RNTI of the first node U01 is not the first C-RNTI.

As one embodiment, the C-RNTI of the first node U01 is the first C-RNTI.

As one embodiment, the PDCCH identified by the C-RNTI of the first node U01 means: a PDCCH whose CRC is scrambled by the C-RNTI of the first node U01.

As one embodiment, the PDCCH identified by the C-RNTI of the first node U01 means: a PDCCH addressed to the C-RNTI of the first node U01.

As one embodiment, the first time window is configured by BeamFailureRecoveryConfig.

As one embodiment, the first time window is configured by one RRC IE whose name comprises BeamFailureRecoveryConfig. The one RRC IE is not BeamFailureRecoveryConfig.

As one embodiment, the first time window is ra-ResponseWindow.

As one embodiment, a CORESET associated with the first search space is not associated with other search spaces.

As one embodiment, the phrase of being used for a BFR means: being used for a BFR RAR (Random Access Response).

As one embodiment, the phrase of being used for BFR means: being used for receiving a BFR RAR.

As one embodiment, the phrase of being used for BFR means: being configured to BFR.

As one embodiment, the first search space is used for a BFR for the first cell.

As one embodiment, the first search space is used for a BFR of a given BFD-RS set for the first cell.

As one embodiment, the given BFD-RS set is the first BFD-RS set.

As one embodiment, the given BFD-RS set is a default BFD-RS set.

As one embodiment, the given BFD-RS set is any one of the first BFD-RS set and the first BFD-RS set.

As one embodiment, the given BFD-RS set is the first BFD-RS set and a BFD-RS set indicated by an RRC message, or an MAC CE, or DCI in the first BFD-RS set.

As one embodiment, the first search space is used for a BFR for the first cell, and the first search space is used for a BFR for the given BFD-RS set.

As one embodiment, the first search space is used for the BFR for the given BFD-RS set, and the first search space is not used for the BFR for the first cell.

### Embodiment 12

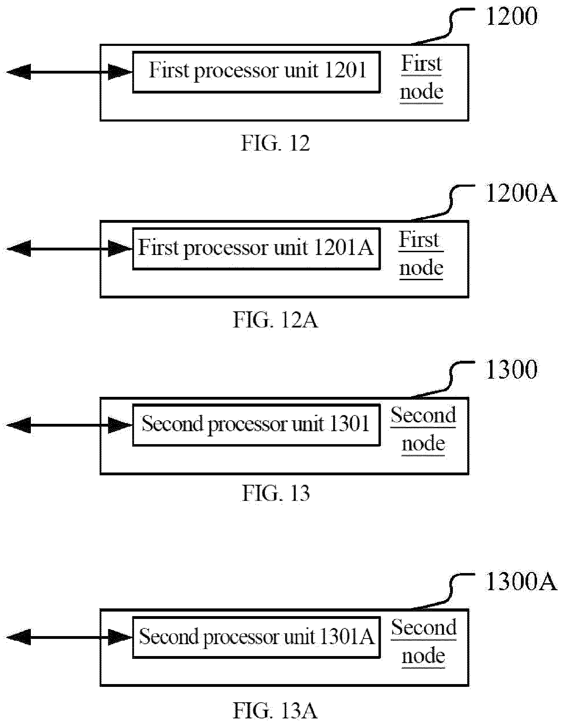

Embodiment 12 illustrates a structural block diagram of a processing unit used in a first node according to one embodiment of the present application, as shown in FIG. 12. In FIG. 12, the processing unit 1200 in the first node comprises a first processor unit 1201.

The first processor unit 1201 initiates a first random access procedure when at least a first BFR is triggered; sends a first Preamble in the first random access procedure, the first Preamble being associated with a target RS resource; receives first signaling, in response to the first signaling being received, considers that the first random access procedure has been successfully completed; and along with a behavior of considering that the first random access procedure has been successfully completed, applies the target RS resource,

In Embodiment 12, a first BFD-RS set and a second BFD-RS set for a first cell are configured for a first node, and the first cell is one SpCell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

As one embodiment, the target RS resource is one RS resource in a first RS resource group, the first RS resource group is one subset of a first RS resource set, and the first RS resource set comprises at least one RS resource; the first RS resource set is configured to the first cell; and only the first RS resource group in the first RS resource set is associated with the first BFD-RS set.

As one embodiment, the first processor unit determines the target RS resource in the first RS resource group before a behavior of sending the first Preamble, wherein the first BFD-RS set is used for determining the first RS resource group.

As one embodiment, the first processor unit 1201 determines the target RS resource in the first RS resource set before a behavior of sending the first Preamble.

As one embodiment, the first processor unit 1201 receives second signaling, the second signaling being used for indicating the first RS resource group in the first RS resource set.

As one embodiment, the first processor unit 1201 sends a first MAC CE in the first random access procedure, wherein the first MAC CE indicates that beam failures are detected for at least the first BFD-RS set and the second BFD-RS set, and the first MAC CE does not comprise a candidate RS ID of any one of the first BFD-RS set and the second BFD-RS set.

As one embodiment, the first processor unit 1201 starts a first time window along with the first Preamble; and during an operation of the first time window, monitors a PDCCH identified by a C-RNTI of the first node in a first search space, wherein, during the operation of the first time window, the first signaling is received; and the first search space is used for BFR.

As one embodiment, the first processor unit 1201 comprises the antenna 452, the receiving device 454, the multi-antenna receiving processor 458, the receiving processor 456, the controller/processor 459, the memory 460, and the data source 467 in FIG. 4 of the present application.

As one embodiment, the first processor unit 1201 comprises the antenna 452, the receiving device 454, the multi-antenna receiving processor 458, and the receiving processor 456 in FIG. 4 of the present application.

As one embodiment, the first processor unit 1201 comprises the antenna 452, the receiving device 454, and the receiving processor 456 in FIG. 4 of the present application.

As one embodiment, the first processor unit 1201 comprises the antenna 452, the transmitting device 454, the multi-antenna transmitting processor 457, the transmitting processor 468, the controller/processor 459, the memory 460, and the data source 467 in FIG. 4 of the present application.

As one embodiment, the first processor unit 1201 comprises the antenna 452, the transmitting device 454, the multi-antenna transmitting processor 457, and the transmitting processor 468 in FIG. 4 of the present application.

As one embodiment, the first processor unit 1201 comprises the antenna 452, the transmitting device 454, and the transmitting processor 468 in FIG. 4 of the present application.

### Embodiment 12A

Embodiment 12A illustrates a structural block diagram of a processing unit used in a first node according to one embodiment of the present application, as shown in FIG. 12A. In FIG. 12A, the processing unit 1200A in the first node comprises a first processor unit 1201A.

The first processor unit 1201A initiates a first random access procedure over a first cell; determines a target RS resource in a first RS resource group; and sending a first Preamble, the first Preamble being associated with the target RS resource,

In Embodiment 12A, the first RS resource group is one proper subset of the first RS resource set, the first RS resource set comprising at least one RS resource; and the first RS resource set is configured to the first cell.

As one embodiment, the first processor unit 1201A receives second signaling, the second signaling being used for indicating the first RS resource group in the first RS resource set.

As one embodiment, the first processor unit 1201A determines the first RS resource group in the first RS resource set.

As one embodiment, the first processor unit 1201A receives first DCI, the first DCI being used for triggering the first random access procedure, wherein the first DCI is used for determining the first RS resource group.

As one embodiment, at least a first BFR being triggered is used for triggering the first random access procedure; a first BFD-RS set and a second BFD-RS set are configured for a first cell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

As one embodiment, the first processor unit 1201A comprises the antenna 452, the receiving device 454, the multi-antenna receiving processor 458, the receiving processor 456, the controller/processor 459, the memory 460, and the data source 467 in FIG. 4 of the present application.

As one embodiment, the first processor unit 1201A comprises the antenna 452, the receiving device 454, the multi-antenna receiving processor 458, and the receiving processor 456 in FIG. 4 of the present application.

As one embodiment, the first processor unit 1201A comprises the antenna 452, the receiving device 454, and the receiving processor 456 in FIG. 4 of the present application.

As one embodiment, the first processor unit 1201A comprises the antenna 452, the transmitting device 454, the multi-antenna transmitting processor 457, the transmitting processor 468, the controller/processor 459, the memory 460, and the data source 467 in FIG. 4 of the present application.

As one embodiment, the first processor unit 1201A comprises the antenna 452, the transmitting device 454, the multi-antenna transmitting processor 457, and the transmitting processor 468 in FIG. 4 of the present application.

As one embodiment, the first processor unit 1201A comprises the antenna 452, the transmitting device 454, and the transmitting processor 468 in FIG. 4 of the present application.

### Embodiment 13

Embodiment 13 illustrates a structural block diagram of a processing unit used in a second node according to one embodiment of the present application, as shown in FIG. 13. In FIG. 13, the processing unit 1300 in the second node comprises a second processor unit 1301.

The second processor unit 1301 receives a first Preamble in a first random access procedure, the first Preamble being associated with a target RS resource; and sends first signaling.

In Embodiment 13, the first random access procedure is initiated when at least a first BFR is triggered; in response to the first signaling being received, the first random access procedure is considered to have been successfully completed; along with the first random access procedure being considered to have been successfully completed, the target RS resource is applied; a first BFD-RS set and a second BFD-RS set for a first cell are configured for a first node, and the first cell is one SpCell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

As one embodiment, the target RS resource is one RS resource in a first RS resource group, the first RS resource group is one subset of a first RS resource set, and the first RS resource set comprises at least one RS resource; the first RS resource set is configured to the first cell; and only the first RS resource group in the first RS resource set is associated with the first BFD-RS set.

As one embodiment, the target RS resource is determined in the first RS resource group before the first Preamble is sent, wherein the first BFD-RS set is used for determining the first RS resource group.

As one embodiment, the target RS resource is determined in the first RS resource set before the first Preamble is sent.

As one embodiment, the second processor unit 1301 sends second signaling, the second signaling being used for indicating the first RS resource group in the first RS resource set.

As one embodiment, the second processor unit 1301 receives a first MAC CE in the first random access procedure, wherein the first MAC CE indicates that beam failures are detected for at least the first BFD-RS set and the second BFD-RS set, and the first MAC CE does not comprise a candidate RS ID of any one of the first BFD-RS set and the second BFD-RS set.

As one embodiment, a first time window is started along with the first Preamble; during an operation of the first time window, a PDCCH identified by a C-RNTI of a recipient of the first signaling is monitored in a first search space; during the operation of the first time window, the first signaling is received; and the first search space is used for BFR.

As one embodiment, the second processor unit 1301 comprises the antenna 420, the transmitting device 418, the multi-antenna transmitting processor 471, the transmitting processor 416, the controller/processor 475, and the memory 476 in FIG. 4 of the present application.

As one embodiment, the second processor unit 1301 comprises the antenna 420, the transmitting device 418, the multi-antenna transmitting processor 471, and the transmitting processor 416 in FIG. 4 of the present application.

As one embodiment, the second processor unit 1301 comprises the antenna 420, the transmitting device 418, and the transmitting processor 416 in FIG. 4 of the present application.

As one embodiment, the second processor unit 1301 comprises the antenna 420, the receiving device 418, the multi-antenna receiving processor 472, the receiving processor 470, the controller/processor 475, and the memory 476 in FIG. 4 of the present application.

As one embodiment, the second processor unit 1301 comprises the antenna 420, the receiving device 418, the multi-antenna receiving processor 472, and the receiving processor 470 in FIG. 4 of the present application.

As one embodiment, the second processor unit 1301 comprises the antenna 420, the receiving device 418, and the receiving processor 470 in FIG. 4 of the present application.

### Embodiment 13A

Embodiment 13A illustrates a structural block diagram of a processing unit used in a second node according to one embodiment of the present application, as shown in FIG. 13A. In

FIG. 13A, the processing unit 1300A in the second node comprises a second processor unit 1301A.

The second processor unit 1301A receives a first Preamble, the first Preamble being associated with a target RS resource.

In Embodiment 13A, a first random access procedure is initiated over a first cell; the target RS resource is determined in a first RS resource group; the first RS resource group is one proper subset of a first RS resource set, and the first RS resource set comprises at least one RS resource; and the first RS resource set is configured to the first cell.

As one embodiment, the second processor unit 1301A sends second signaling, the second signaling being used for indicating the first RS resource group in the first RS resource set.

As one embodiment, the first RS resource group is determined in the first RS resource set.

As one embodiment, the second processor unit 1301A sends first DCI, the first DCI being used for triggering the first random access procedure, wherein the first DCI is used for determining the first RS resource group.

As one embodiment, according to one aspect of the present application, it is characterized in that at least a first BFR being triggered is used for triggering the first random access procedure; a first BFD-RS set and a second BFD-RS set are configured for a first cell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

As one embodiment, the second processor unit 1301A comprises the antenna 420, the transmitting device 418, the multi-antenna transmitting processor 471, the transmitting processor 416, the controller/processor 475, and the memory 476 in FIG. 4 of the present application.

As one embodiment, the second processor unit 1301A comprises the antenna 420, the transmitting device 418, the multi-antenna transmitting processor 471, and the transmitting processor 416 in FIG. 4 of the present application.

As one embodiment, the second processor unit 1301A comprises the antenna 420, the transmitting device 418, and the transmitting processor 416 in FIG. 4 of the present application.

As one embodiment, the second processor unit 1301A comprises the antenna 420, the receiving device 418, the multi-antenna receiving processor 472, the receiving processor 470, the controller/processor 475, and the memory 476 in FIG. 4 of the present application.

As one embodiment, the second processor unit 1301A comprises the antenna 420, the receiving device 418, the multi-antenna receiving processor 472, and the receiving processor 470 in FIG. 4 of the present application.

As one embodiment, the second processor unit 1301A comprises the antenna 420, the receiving device 418, and the receiving processor 470 in FIG. 4 of the present application.

Those of ordinary skill in the art can understand that all or part of the steps in the above-mentioned method may be completed by instructing relevant hardware through a program, and the program may be stored in a computer-readable storage medium, such as a read-only memory, a hard disk or an optical disk. Optionally, all or part of the steps in the above embodiments may also be implemented using one or a plurality of integrated circuits. Accordingly, each module unit in the above embodiments may be implemented in the form of hardware or in the form of a software function module, and the present application is not limited to any specific form of software and hardware combination. The user equipment, terminals, and UE of the present application comprise, but are not limited to drones, communication modules on drones, remote-controlled aircrafts, aircrafts, small aircrafts, mobile phones, tablet computers, laptops, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base stations or system devices in the present application comprise, but are not limited to, macro cellular base stations, micro cellular base stations, Femtocells, relay base stations, gNBs (NR nodes B), TRPs (Transmitter Receiver Points) and other wireless communication devices.

The above are only preferred embodiments of the present application and are not used for limiting the scope of protection of the present application. Any modifications, equivalent replacements, improvements, etc. made within the spirit and principles of the present application should be comprised in the scope of protection of the present application.

## Claims

1. A first node for use in wireless communication, comprising:
a first processor unit initiating a first random access procedure when at least a first BFR is triggered; sending a first Preamble in the first random access procedure, the first Preamble being associated with a target RS resource; receiving first signaling; in response to the first signaling being received, considering that the first random access procedure has been successfully completed; and along with a behavior of considering that the first random access procedure has been successfully completed, applying the target RS resource,
wherein a first BFD-RS set and a second BFD-RS set for a first cell are configured for a first node, and the first cell is one SpCell;the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

2. The first node according to claim 1, wherein the target RS resource is one RS resource in a first RS resource group, the first RS resource group is one subset of a first RS resource set, the first RS resource set comprises at least one RS resource; the first RS resource set is configured to the first cell; and only the first RS resource group in the first RS resource set is associated with the first BFD-RS set.

3. The first node according to claim 2, comprising:
the first processor unit determining the target RS resource in the first RS resource group before a behavior of sending the first Preamble,
wherein the first BFD-RS set is used for determining the first RS resource group.

4. The first node according to claim 2, comprising:
the first processor unit determining the target RS resource in the first RS resource set before a behavior of sending the first Preamble.

5. The first node according to any one of claims 2 to 4, comprising:
the first processor unit receiving second signaling, wherein the second signaling is used to indicate the first RS resource group in the first RS resource set.

6. The first node according to any one of claims 1 to 5, comprising:
the first processor unit sending a first MAC CE in the first random access procedure,
wherein the first MAC CE indicates that beam failures are detected for at least the first BFD-RS set and the second BFD-RS set, and the first MAC CE does not comprise a candidate RS ID of any one of the first BFD-RS set and the second BFD-RS set.

7. The first node according to any one of claims 1 to 6, comprising:
the first processor unit starting a first time window along with the first Preamble; and during an operation of the first time window, monitoring a PDCCH identified by a C-RNTI of the first node in a first search space,
wherein, during the operation of the first time window, the first signaling is received; and the first search space is used for BFR.

8. A second node for use in wireless communication, comprising:
a second processor unit receiving a first Preamble in a first random access procedure, the first Preamble being associated with a target RS resource; and sending first signaling,
wherein the first random access procedure is initiated when at least a first BFR is triggered;
in response to the first signaling being received, the first random access procedure is considered to have been successfully completed; along with the first random access procedure being considered to have been successfully completed, the target RS resource is applied; a first BFD-RS set and a second BFD-RS set for a first cell are configured for a first node, and the first cell is one SpCell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

9. A method for use in a first node for wireless communication, comprising:
initiating a first random access procedure when at least a first BFR is triggered; sending a first Preamble in the first random access procedure, the first Preamble being associated with a target RS resource; receiving first signaling; in response to the first signaling being received, considering that the first random access procedure has been successfully completed; and along with a behavior of considering that the first random access procedure has been successfully completed, applying the target RS resource,
wherein a first BFD-RS set and a second BFD-RS set for a first cell are configured for a first node, and the first cell is one SpCell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.

10. A method for use in a second node for wireless communication, comprising:
receiving a first Preamble in a first random access procedure, the first Preamble being associated with a target RS resource; and sending first signaling,
wherein the first random access procedure is initiated when at least a first BFR is triggered;
in response to the first signaling being received, the first random access procedure is considered to have been successfully completed; along with the first random access procedure being considered to have been successfully completed, the target RS resource is applied; a first BFD-RS set and a second BFD-RS set for a first cell are configured for a first node, and the first cell is one SpCell; the first BFD-RS set comprises at least one RS resource; radio link quality evaluated according to the first BFD-RS set being worse than a first threshold is used for increasing a first counter by 1; the first counter reaching a first value is used for triggering one of the first BFRs; the second BFD-RS set comprises at least one RS resource; radio link quality evaluated according to the second BFD-RS set being worse than a second threshold is used for increasing a second counter by 1; and the second counter reaching a second value is used for triggering one second BFR.
